# EUROPEAN PATENT APPLICATION

(11) **EP 4 831 832 A1**
(43) Date of publication of application: **28.10.2026**
(21) Application number: 24916408.8
(22) Date of filing: 30.08.2024
(51) Int. Cl.: G06F 16/33

(54) **TEXT PROCESSING METHOD AND APPARATUS, AND DEVICE AND COMPUTER-READABLE STORAGE MEDIUM**

(30) Priority: 09.01.2024 CN 202410033263
(71) Applicant: Huawei Technologies Co., Ltd., Shenzhen, Guangdong 518129 (CN)
(72) Inventor: YAN, Xiaohui, Shenzhen, Guangdong 518129 (CN)
(74) Representative: Isarpatent
(86) International application number: PCT/CN2024/116144
(87) International publication number: WO 2025/148356

(57) **Abstract**

This application relates to the field of terminal technologies, and provides a text processing method and apparatus, a device, and a computer-readable storage medium. The method includes: obtaining a to-be-queried text; generating query operation information based on the to-be-queried text, where the query operation information represents a query plan for querying the to-be-queried text; and determining a plurality of to-be-queried subtexts based on the query operation information. At least two of the plurality of to-be-queried subtexts are processed in parallel when first query processing is performed on the plurality of to-be-queried subtexts by using a text generation model. This shortens time for performing first query processing on the plurality of to-be-queried subtexts by the text generation model, thereby shortening time for generating a plurality of first subquery results, and improving efficiency of generating the plurality of first subquery results.

## Description

This application claims priority to Chinese Patent Application No. 202410033263.6, filed with the China National Intellectual Property Administration on January 9, 2024 and entitled "TEXT PROCESSING METHOD AND APPARATUS, DEVICE, AND COMPUTER-READABLE STORAGE MEDIUM", which is incorporated herein by reference in its entirety.

### TECHNICAL FIELD

This application relates to the field of terminal technologies, and in particular, to a text processing method and apparatus, a device, and a computer-readable storage medium.

### BACKGROUND

With development of natural language processing technologies, text generation technologies have gradually become a hot topic of research in artificial intelligence. In application of the text generation technologies, a text generation model may be usually used to process a user question, to generate a reply text. However, due to a feature of the text generation model, the reply text is generated word by word when the user question is processed. As a result, time consumed for generating the reply text is long, and efficiency is low.

### SUMMARY

This application provides a text processing method and apparatus, a device, and a computer-readable storage medium, to shorten time for performing first query processing on a plurality of to-be-queried subtexts by a text generation model, thereby shortening time for generating a plurality of first subquery results (reply texts), and improving efficiency of generating the plurality of first subquery results.

According to a first aspect, a text processing method is provided. The method includes: obtaining a to-be-queried text; generating query operation information based on the to-be-queried text, where the query operation information represents a query plan for querying the to-be-queried text; determining a plurality of to-be-queried subtexts based on the query operation information; and performing first query processing on the plurality of to-be-queried subtexts by using a text generation model to obtain a first subquery result corresponding to each to-be-queried subtext, and outputting a plurality of first subquery results, where first query processing on at least two of the plurality of to-be-queried subtexts is performed in parallel.

In embodiments of this application, the to-be-queried text is a text used to express an information requirement or answer a question. The query operation information generated based on the to-be-queried text includes a plurality of query steps for querying the to-be-queried text. The plurality of to-be-queried subtexts may be determined based on the query operation information. When the plurality of to-be-queried subtexts are processed by using the text generation model, parallel processing may be performed on the at least two of the plurality of to-be-queried subtexts. This shortens time for performing first query processing on the plurality of to-be-queried subtexts by the text generation model, thereby shortening time for generating the plurality of first subquery results (reply texts), and improving efficiency of generating the reply texts by the text generation model; and further shortens time for a user to wait to view the reply text, thereby improving user experience.

It should be understood that the text processing method provided in this application is applied to an electronic device, and the electronic device may be a server or a terminal. When the electronic device is a terminal, the terminal may output the plurality of first subquery results to a display for display. When the electronic device is a server, the server may send the plurality of first subquery results to a terminal of a user, and the terminal may output the plurality of received first subquery results to a display for display. The display is a display of the terminal, or may be a display externally connected to the terminal.

The query operation information includes at least semantics of the to-be-queried text.

In a possible implementation, generating the query operation information based on the to-be-queried text may be implemented in the following manner: determining related information of the to-be-queried text based on the to-be-queried text; and generating the query operation information based on the to-be-queried text and the related information of the to-be-queried text. The query operation information not only includes the semantics of the to-be-queried text, but also includes semantics of the related information of the to-be-queried text.

In embodiments of this application, the to-be-queried text may be expanded to obtain the related information of the to-be-queried text, and then the query operation information is generated based on the to-be-queried text and the related information of the to-be-queried text. This improves richness and integrity of the obtained query operation information.

In a possible implementation, generating the query operation information based on the to-be-queried text may be further implemented in the following manner: processing the to-be-queried text by using an operation information generation model, to obtain the query operation information.

The query operation information not only includes the semantics of the to-be-queried text, but also includes the semantics of the related information of the to-be-queried text. The operation information generation model may be obtained by training an initial operation information generation model. The initial operation information generation model may be a neural network model including ultra-large-scale parameters. Certainly, the initial operation information generation model may alternatively be a deep neural network model having a small quantity of parameters. The neural network model including ultra-large-scale parameters or the deep neural network model having a small quantity of parameters may be flexibly selected as the initial operation information generation model based on an application scenario. The initial operation information generation model is not specifically limited in embodiments of this application.

Based on the foregoing solution, the to-be-queried text may be input into the operation information generation model, and the operation information generation model processes the to-be-queried text, to obtain the query operation information. This shortens time for obtaining the query operation information, and improves efficiency of obtaining the query operation information.

In a possible implementation, the operation information generation model is obtained in the following manner: obtaining a to-be-queried sample text and sample query operation information corresponding to the to-be-queried sample text, where the sample query operation information represents a query plan for querying the to-be-queried sample text; and training the initial operation information generation model based on the to-be-queried sample text and the sample query operation information, to obtain the operation information generation model.

In embodiments of this application, a large quantity of question pairs may be obtained, and each question pair includes a question and an answer. The question may be used as the to-be-queried sample text, and in response to an editing operation of the user, the sample query operation information is constructed based on the question and the answer, or the sample query operation information is constructed only based on the question. Alternatively, the sample query operation information may be automatically constructed by the electronic device based on the question and the answer, or automatically constructed by the electronic device only based on the question. The large quantity of question pairs may be input by the user, may be downloaded from a network in response to an obtaining instruction of the user, or may be actively downloaded by the electronic device from the network.

In a possible implementation, determining the plurality of to-be-queried subtexts based on the query operation information may be implemented in the following manner:
determining a plurality of initial to-be-queried subtexts from the query operation information;
and using the plurality of initial to-be-queried subtexts as the plurality of to-be-queried subtexts.

Based on the foregoing solution, the query operation information may be split to obtain the plurality of initial to-be-queried subtexts, and the initial to-be-queried subtexts are used as the to-be-queried subtexts. This simplifies a process of obtaining the plurality of to-be-queried subtexts, and improves efficiency of obtaining the plurality of to-be-queried subtexts.

In a possible implementation, determining the plurality of to-be-queried subtexts based on the query operation information may be implemented in the following manner: determining a plurality of initial to-be-queried subtexts from the query operation information; and performing, for each initial to-be-queried subtext, second query processing on the initial to-be-queried subtext by using a search service to obtain a second subquery result, and combining the second subquery result and the initial to-be-queried subtext to obtain the to-be-queried subtext.

Based on the foregoing solution, the initial to-be-queried subtext and the second subquery result corresponding to the initial to-be-queried subtext are combined to obtain the to-be-queried subtext. This improves integrity and richness of the determined to-be-queried subtext, and further improves accuracy and integrity of the first subquery result subsequently determined based on the to-be-queried subtext.

In a possible implementation, performing first query processing on the plurality of to-be-queried subtexts by using the text generation model to obtain the first subquery result corresponding to each to-be-queried subtext may be implemented in the following manner: performing first query processing on the plurality of to-be-queried subtexts in parallel by using a generative pre-trained transformer (generative pre-trained transformer, GPT) to obtain the first subquery result corresponding to each to-be-queried subtext, where the text generation model includes the GPT.

Based on the foregoing solution, whether there is a dependency relationship between the plurality of to-be-queried subtexts does not need to be considered. The GPT is used to perform first query processing on the plurality of to-be-queried subtexts in parallel, to obtain the first subquery result corresponding to each to-be-queried subtext. This shortens time for performing first query processing on the plurality of to-be-queried subtexts by the GPT, thereby shortening time for generating the plurality of first subquery results by the GPT, and improving efficiency of generating the plurality of first subquery results (namely, the reply texts) by the GPT.

In a possible implementation, performing first query processing on the plurality of to-be-queried subtexts by using the text generation model to obtain the first subquery result corresponding to each to-be-queried subtext may be implemented in the following manner: performing, when there is no dependency relationship between the plurality of to-be-queried subtexts, first query processing on the plurality of to-be-queried subtexts in parallel by using a GPT to obtain the first subquery result corresponding to each to-be-queried subtext, where the text generation model includes the GPT.

In a possible implementation, performing first query processing on the plurality of to-be-queried subtexts by using the text generation model to obtain the first subquery result corresponding to each to-be-queried subtext may be implemented in the following manner: performing, when there is a dependency relationship between the plurality of to-be-queried subtexts, first query processing on the plurality of to-be-queried subtexts by using a GPT to obtain the first subquery result corresponding to each to-be-queried subtext, where first query processing on at least two of the plurality of to-be-queried subtexts is performed in parallel, a quantity of the at least two to-be-queried subtexts is less than a quantity of the plurality of to-be-queried subtexts, and the text generation model includes the GPT.

Based on the foregoing solution, when there is the dependency relationship between the plurality of to-be-queried subtexts, some of the plurality of to-be-queried subtexts may be processed in parallel. This improves flexibility of parallel processing.

In a possible implementation, before performing, when there is the dependency relationship between the plurality of to-be-queried subtexts, first query processing on the plurality of to-be-queried subtexts by using the GPT to obtain the first subquery result corresponding to each to-be-queried subtext, the method includes: when there is the dependency relationship between the plurality of to-be-queried subtexts, determining the at least two to-be-queried subtexts from the plurality of to-be-queried subtexts based on the dependency relationship.

In a possible implementation, before performing first query processing on the plurality of to-be-queried subtexts by using the text generation model to obtain the first subquery result corresponding to each to-be-queried subtext, the method includes: determining, based on the query operation information, whether there is the dependency relationship between the plurality of to-be-queried subtexts.

In a possible implementation, when there is the dependency relationship between the plurality of to-be-queried subtexts, the plurality of first subquery results are output based on the dependency relationship. At least two of the plurality of first subquery results are output in parallel.

In the foregoing solution, when there is the dependency relationship between the plurality of to-be-queried subtexts, the plurality of first subquery results may be output based on the dependency relationship. This ensures readability and coherence of the plurality of output first subquery results, and improves user experience.

In a possible implementation, obtaining the to-be-queried text may be implemented in the following manner: obtaining to-be-queried information; and when a format of the to-be-queried information is a text format, using the to-be-queried information as the to-be-queried text; or when a format of the to-be-queried information is a non-text format, performing format conversion on the to-be-queried information to obtain the to-be-queried text.

The format of the to-be-queried information may include but is not limited to at least one of information formats such as a text format, an image format, or an audio format.

In embodiments of this application, the to-be-queried information may be sent by another device to the electronic device. Certainly, the to-be-queried information may alternatively be obtained in response to an input operation of the user. The to-be-queried information may alternatively be generated by the electronic device based on an actual application scenario. Therefore, the to-be-queried information may be obtained in at least one of the foregoing manners. This improves flexibility of obtaining the to-be-queried information.

In a possible implementation, at least two of the plurality of first subquery results are output in parallel.

In embodiments of this application, after at least two to-be-queried subtexts are processed in parallel by using the text generation model, first subquery results corresponding to the at least two to-be-queried subtexts may be output in parallel.

For example, when the text processing method is applied to the terminal, if the quantity of the plurality of to-be-queried subtexts is two, the terminal may perform parallel processing on the two to-be-queried subtexts by using a text generation model deployed on the terminal to obtain two first subquery results, and output the two first subquery results in parallel to the display of the terminal for display. When the two first subquery results are simultaneously output by the text generation model, outputting the two first subquery results in parallel to the display of the terminal for display means: simultaneously displaying and outputting the two first subquery results in a display interface of the terminal, where start time points at which the two first subquery results are displayed are the same. When the two first subquery results are not simultaneously output by the text generation model, the 1^{st} first subquery result first output by the text generation model may be output to the display of the terminal for display. In a process of displaying the 1^{st} first subquery result, that is, when displaying of the 1^{st} first subquery result does not end, if the text generation model outputs the 2^{nd} first subquery result, the 2^{nd} first subquery result may be synchronously displayed without waiting for an end of displaying of the 1^{st} first subquery result, where start time points at which the two first subquery results are displayed are different.

Based on the foregoing solution, the two first subquery results may be synchronously displayed to the user. This shortens waiting time of the user and improves user experience.

For example, when the text processing method is applied to the server, if the quantity of the plurality of to-be-queried subtexts is two, the server may perform parallel processing on the two to-be-queried subtexts by using a text generation model deployed on the server to obtain two first subquery results, and output the two first subquery results in parallel to the display of the terminal for display. When the two first subquery results are simultaneously output by the text generation model, outputting the two first subquery results in parallel means: simultaneously sending the two first subquery results to the terminal. After receiving the two first subquery results, the terminal may simultaneously display the two first subquery results in a display interface of the display. In other words, it can be viewed that the two first subquery results are simultaneously displayed in the interface of the display, that is, start time points at which the two first subquery results are displayed are the same, and the 2^{nd} first subquery result is displayed without waiting for an end of displaying of the 1^{st} first subquery result.

When the two first subquery results are not simultaneously output by the text generation model, the 1^{st} first subquery result first output by the text generation model may be sent to the terminal. In a process of sending the 1^{st} first subquery result, if the text generation model outputs the 2^{nd} first subquery result, the 2^{nd} first subquery result may be sent to the terminal. In this case, the terminal may first display the received 1^{st} first subquery result. In a process of displaying the 1^{st} first subquery result, if the 2^{nd} first subquery result is received, the 2^{nd} first subquery result may also be displayed. In other words, it can be viewed that the 1^{st} first subquery result is displayed first in the display interface of the display, and the 2^{nd} first subquery result is also displayed in the display interface in a process of displaying the 1^{st} first subquery result, that is, when displaying of the 1^{st} first subquery result does not end. The 2^{nd} first subquery result may be synchronously displayed without waiting for the end of displaying of the 1^{st} first subquery result.

Based on the foregoing solution, the two first subquery results may be synchronously displayed to the user. This shortens waiting time of the user and improves user experience.

According to a second aspect, a text processing method is provided, and is applied to a terminal. The method includes: sending, to a server in response to a target operation, a query request used to query a to-be-queried text; receiving a plurality of first subquery results sent by the server, where the plurality of first subquery results are obtained by the server by generating, in response to the query request, query operation information based on the to-be-queried text, and performing, by using a text generation model, first query processing on a plurality of to-be-queried subtexts determined based on the query operation information, the query operation information represents a query plan for querying the to-be-queried text, and first query processing on at least two of the plurality of to-be-queried subtexts is performed in parallel; and displaying the plurality of first subquery results.

In a possible implementation, the query operation information is obtained after the server processes the to-be-queried text by using an operation information generation model.

In a possible implementation, the operation information generation model is obtained by the server by obtaining a to-be-queried sample text and sample query operation information corresponding to the to-be-queried sample text, and training an initial operation information generation model based on the to-be-queried sample text and the sample query operation information, and the sample query operation information represents a query plan for querying the to-be-queried sample text.

In a possible implementation, at least two of the plurality of first subquery results are sent by the server to the terminal in parallel.

In a possible implementation, the at least two of the plurality of first subquery results are displayed in parallel.

In a possible implementation, the plurality of to-be-queried subtexts are a plurality of initial to-be-queried subtexts determined by the server from the query operation information; or the plurality of to-be-queried subtexts are obtained by the server by determining a plurality of initial to-be-queried subtexts from the query operation information, performing, for each initial to-be-queried subtext, second query processing on the initial to-be-queried subtext by using a search service to obtain a second subquery result, and combining the second subquery result and the initial to-be-queried subtext.

In a possible implementation, the plurality of first subquery results are obtained by the server by performing first query processing on the plurality of to-be-queried subtexts in parallel by using a generative pre-trained transformer GPT, where the text generation model includes the GPT.

In a possible implementation, the plurality of first subquery results are obtained by the server by performing, when there is no dependency relationship between the plurality of to-be-queried subtexts, first query processing on the plurality of to-be-queried subtexts in parallel by using a GPT, where the text generation model includes the GPT.

In a possible implementation, the plurality of first subquery results are obtained by the server by performing, when there is a dependency relationship between the plurality of to-be-queried subtexts, first query processing on the plurality of to-be-queried subtexts by using a GPT, where first query processing on at least two of the plurality of to-be-queried subtexts is performed in parallel, a quantity of the at least two to-be-queried subtexts is less than a quantity of the plurality of to-be-queried subtexts, and the text generation model includes the GPT.

In a possible implementation, when there is a dependency relationship between the plurality of to-be-queried subtexts, the at least two to-be-queried subtexts are determined by the server from the plurality of to-be-queried subtexts based on the dependency relationship.

In a possible implementation, when there is a dependency relationship between the plurality of to-be-queried subtexts, the plurality of first subquery results are output by the server to the terminal based on the dependency relationship.

According to a third aspect, a text processing system is provided. The system includes a server and a terminal, and the terminal is connected to the server. The terminal is configured to send, to the server in response to a target operation, a query request used to query a to-be-queried text. The server is configured to: generate, in response to the query request, query operation information based on the to-be-queried text, where the query operation information represents a query plan for querying the to-be-queried text; determine a plurality of to-be-queried subtexts based on the query operation information; perform first query processing on the plurality of to-be-queried subtexts by using a text generation model to obtain a first subquery result corresponding to each to-be-queried subtext, where first query processing on at least two of the plurality of to-be-queried subtexts is performed in parallel; and send a plurality of first subquery results to the terminal. The terminal is further configured to: receive the plurality of first subquery results sent by the server, and display the plurality of first subquery results.

According to a fourth aspect, a text processing apparatus is provided. The apparatus includes: an obtaining unit, configured to obtain a to-be-queried text; a processing unit, configured to generate query operation information based on the to-be-queried text, where the query operation information represents a query plan for querying the to-be-queried text, where the processing unit is further configured to determine a plurality of to-be-queried subtexts based on the query operation information; and the processing unit is further configured to perform first query processing on the plurality of to-be-queried subtexts by using a text generation model to obtain a first subquery result corresponding to each to-be-queried subtext, where first query processing on at least two of the plurality of to-be-queried subtexts is performed in parallel; and a communication unit, configured to output a plurality of first subquery results.

In a possible implementation, the processing unit is specifically configured to perform the following step: processing the to-be-queried text by using an operation information generation model, to obtain the query operation information.

In a possible implementation, the processing unit is further configured to perform the following steps: obtaining a to-be-queried sample text and sample query operation information corresponding to the to-be-queried sample text, where the sample query operation information represents a query plan for querying the to-be-queried sample text; and training an initial operation information generation model based on the to-be-queried sample text and the sample query operation information, to obtain the operation information generation model.

In a possible implementation, the processing unit is specifically configured to perform the following steps: determining a plurality of initial to-be-queried subtexts from the query operation information; and using the plurality of initial to-be-queried subtexts as the plurality of to-be-queried subtexts; or performing, for each initial to-be-queried subtext, second query processing on the initial to-be-queried subtext by using a search service to obtain a second subquery result, and combining the second subquery result and the initial to-be-queried subtext to obtain the to-be-queried subtext.

In a possible implementation, the processing unit is specifically configured to perform the following step: performing first query processing on the plurality of to-be-queried subtexts in parallel by using a generative pre-trained transformer GPT to obtain the first subquery result corresponding to each to-be-queried subtext, where the text generation model includes the GPT.

In a possible implementation, the processing unit is specifically configured to perform the following step: performing, when there is no dependency relationship between the plurality of to-be-queried subtexts, first query processing on the plurality of to-be-queried subtexts in parallel by using a GPT to obtain the first subquery result corresponding to each to-be-queried subtext, where the text generation model includes the GPT.

In a possible implementation, the processing unit is specifically configured to perform the following step: performing, when there is a dependency relationship between the plurality of to-be-queried subtexts, first query processing on the plurality of to-be-queried subtexts by using a GPT to obtain the first subquery result corresponding to each to-be-queried subtext, where first query processing on at least two of the plurality of to-be-queried subtexts is performed in parallel, a quantity of the at least two to-be-queried subtexts is less than a quantity of the plurality of to-be-queried subtexts, and the text generation model includes the GPT.

In a possible implementation, the processing unit is further configured to perform the following step: when there is the dependency relationship between the plurality of to-be-queried subtexts, determining the at least two to-be-queried subtexts from the plurality of to-be-queried subtexts based on the dependency relationship.

In a possible implementation, the processing unit is further configured to perform the following step: determining, based on the query operation information, whether there is the dependency relationship between the plurality of to-be-queried subtexts.

In a possible implementation, the communication unit is specifically configured to perform the following step: outputting, when there is the dependency relationship between the plurality of to-be-queried subtexts, the plurality of first subquery results based on the dependency relationship.

In a possible implementation, the obtaining unit is specifically configured to perform the following steps: obtaining to-be-queried information; and when a format of the to-be-queried information is a text format, using the to-be-queried information as the to-be-queried text; or when a format of the to-be-queried information is a non-text format, performing format conversion on the to-be-queried information to obtain the to-be-queried text.

In a possible implementation, at least two of the plurality of first subquery results are output in parallel.

According to a fifth aspect, a text processing apparatus is provided. The apparatus includes: a communication unit, configured to send, to a server in response to a target operation, a query request used to query a to-be-queried text; the communication unit, configured to receive a plurality of first subquery results sent by the server, where the plurality of first subquery results are obtained by the server by generating, in response to the query request, query operation information based on the to-be-queried text, and performing, by using a text generation model, first query processing on a plurality of to-be-queried subtexts determined based on the query operation information, the query operation information represents a query plan for querying the to-be-queried text, and first query processing on at least two of the plurality of to-be-queried subtexts is performed in parallel; and a processing unit, configured to display the plurality of first subquery results.

In a possible implementation, the apparatus further includes an obtaining unit. The obtaining unit is configured to obtain the to-be-queried text in response to the target operation. The processing unit is further configured to generate the query request that carries the to-be-queried text.

In a possible implementation, the query operation information is obtained after the server processes the to-be-queried text by using an operation information generation model.

In a possible implementation, the operation information generation model is obtained by the server by obtaining a to-be-queried sample text and sample query operation information corresponding to the to-be-queried sample text, and training an initial operation information generation model based on the to-be-queried sample text and the sample query operation information, and the sample query operation information represents a query plan for querying the to-be-queried sample text.

In a possible implementation, at least two of the plurality of first subquery results are sent by the server to a terminal in parallel.

In a possible implementation, the at least two of the plurality of first subquery results are displayed in parallel.

In a possible implementation, the plurality of to-be-queried subtexts are a plurality of initial to-be-queried subtexts determined by the server from the query operation information; or the plurality of to-be-queried subtexts are obtained by the server by determining a plurality of initial to-be-queried subtexts from the query operation information, performing, for each initial to-be-queried subtext, second query processing on the initial to-be-queried subtext by using a search service to obtain a second subquery result, and combining the second subquery result and the initial to-be-queried subtext.

In a possible implementation, the plurality of first subquery results are obtained by the server by performing first query processing on the plurality of to-be-queried subtexts in parallel by using a generative pre-trained transformer GPT, where the text generation model includes the GPT.

In a possible implementation, the plurality of first subquery results are obtained by the server by performing, when there is no dependency relationship between the plurality of to-be-queried subtexts, first query processing on the plurality of to-be-queried subtexts in parallel by using a GPT, where the text generation model includes the GPT.

In a possible implementation, the plurality of first subquery results are obtained by the server by performing, when there is a dependency relationship between the plurality of to-be-queried subtexts, first query processing on the plurality of to-be-queried subtexts by using a GPT, where first query processing on at least two of the plurality of to-be-queried subtexts is performed in parallel, a quantity of the at least two to-be-queried subtexts is less than a quantity of the plurality of to-be-queried subtexts, and the text generation model includes the GPT.

In a possible implementation, when there is a dependency relationship between the plurality of to-be-queried subtexts, the at least two to-be-queried subtexts are determined by the server from the plurality of to-be-queried subtexts based on the dependency relationship.

In a possible implementation, when there is a dependency relationship between the plurality of to-be-queried subtexts, the plurality of first subquery results are output by the server to the terminal based on the dependency relationship.

According to a sixth aspect, an electronic device is provided. The electronic device includes one or more processors and a memory. The memory is coupled to the one or more processors. The memory is configured to store computer program code. The computer program code includes computer instructions. The one or more processors invoke the computer instructions to enable the electronic device to perform the following operations: obtaining a to-be-queried text; generating query operation information based on the to-be-queried text, where the query operation information represents a query plan for querying the to-be-queried text; determining a plurality of to-be-queried subtexts based on the query operation information; and performing first query processing on the plurality of to-be-queried subtexts by using a text generation model to obtain a first subquery result corresponding to each to-be-queried subtext, and outputting a plurality of first subquery results, where first query processing on at least two of the plurality of to-be-queried subtexts is performed in parallel.

For example, the electronic device is a server or a terminal.

In a possible implementation, the one or more processors invoke the computer instructions to enable the electronic device to perform the following operation: processing the to-be-queried text by using an operation information generation model, to obtain the query operation information.

In a possible implementation, the one or more processors invoke the computer instructions to enable the electronic device to perform the following operations: obtaining a to-be-queried sample text and sample query operation information corresponding to the to-be-queried sample text, where the sample query operation information represents a query plan for querying the to-be-queried sample text; and training an initial operation information generation model based on the to-be-queried sample text and the sample query operation information, to obtain the operation information generation model.

In a possible implementation, the one or more processors invoke the computer instructions to enable the electronic device to perform the following operations: determining a plurality of initial to-be-queried subtexts from the query operation information; and using the plurality of initial to-be-queried subtexts as the plurality of to-be-queried subtexts; or performing, for each initial to-be-queried subtext, second query processing on the initial to-be-queried subtext by using a search service to obtain a second subquery result, and combining the second subquery result and the initial to-be-queried subtext to obtain the to-be-queried subtext.

In a possible implementation, the one or more processors invoke the computer instructions to enable the electronic device to perform the following operation: performing first query processing on the plurality of to-be-queried subtexts in parallel by using a generative pre-trained transformer GPT to obtain the first subquery result corresponding to each to-be-queried subtext, where the text generation model includes the GPT.

In a possible implementation, the one or more processors invoke the computer instructions to enable the electronic device to perform the following operation: performing, when there is no dependency relationship between the plurality of to-be-queried subtexts, first query processing on the plurality of to-be-queried subtexts in parallel by using a GPT to obtain the first subquery result corresponding to each to-be-queried subtext, where the text generation model includes the GPT.

In a possible implementation, the one or more processors invoke the computer instructions to enable the electronic device to perform the following operation: performing, when there is a dependency relationship between the plurality of to-be-queried subtexts, first query processing on the plurality of to-be-queried subtexts by using a GPT to obtain the first subquery result corresponding to each to-be-queried subtext, where first query processing on at least two of the plurality of to-be-queried subtexts is performed in parallel, a quantity of the at least two to-be-queried subtexts is less than a quantity of the plurality of to-be-queried subtexts, and the text generation model includes the GPT.

In a possible implementation, the one or more processors invoke the computer instructions to enable the electronic device to perform the following operation: when there is the dependency relationship between the plurality of to-be-queried subtexts, determining the at least two to-be-queried subtexts from the plurality of to-be-queried subtexts based on the dependency relationship.

In a possible implementation, the one or more processors invoke the computer instructions to enable the electronic device to perform the following operation: determining, based on the query operation information, whether there is the dependency relationship between the plurality of to-be-queried subtexts.

In a possible implementation, the one or more processors invoke the computer instructions to enable the electronic device to perform the following operation: outputting, when there is the dependency relationship between the plurality of to-be-queried subtexts, the plurality of first subquery results based on the dependency relationship.

In a possible implementation, the one or more processors invoke the computer instructions to enable the electronic device to perform the following operations: obtaining to-be-queried information; and when a format of the to-be-queried information is a text format, using the to-be-queried information as the to-be-queried text; or when a format of the to-be-queried information is a non-text format, performing format conversion on the to-be-queried information to obtain the to-be-queried text.

In a possible implementation, at least two of the plurality of first subquery results are output in parallel.

According to a seventh aspect, an electronic device is provided. The electronic device includes one or more processors and a memory. The memory is coupled to the one or more processors. The memory is configured to store computer program code. The computer program code includes computer instructions. The one or more processors invoke the computer instructions to enable the electronic device to perform the following operations: sending, to a server in response to a target operation, a query request used to query a to-be-queried text; receiving a plurality of first subquery results sent by the server, where the plurality of first subquery results are obtained by the server by generating, in response to the query request, query operation information based on the to-be-queried text, and performing, by using a text generation model, first query processing on a plurality of to-be-queried subtexts determined based on the query operation information, the query operation information represents a query plan for querying the to-be-queried text, and first query processing on at least two of the plurality of to-be-queried subtexts is performed in parallel; and displaying the plurality of first subquery results.

In a possible implementation, the query operation information is obtained after the server processes the to-be-queried text by using an operation information generation model.

In a possible implementation, the operation information generation model is obtained by the server by obtaining a to-be-queried sample text and sample query operation information corresponding to the to-be-queried sample text, and training an initial operation information generation model based on the to-be-queried sample text and the sample query operation information, and the sample query operation information represents a query plan for querying the to-be-queried sample text.

In a possible implementation, at least two of the plurality of first subquery results are sent by the server to a terminal in parallel.

In a possible implementation, the at least two of the plurality of first subquery results are displayed in parallel.

In a possible implementation, the plurality of to-be-queried subtexts are a plurality of initial to-be-queried subtexts determined by the server from the query operation information; or the plurality of to-be-queried subtexts are obtained by the server by determining a plurality of initial to-be-queried subtexts from the query operation information, performing, for each initial to-be-queried subtext, second query processing on the initial to-be-queried subtext by using a search service to obtain a second subquery result, and combining the second subquery result and the initial to-be-queried subtext.

In a possible implementation, the plurality of first subquery results are obtained by the server by performing first query processing on the plurality of to-be-queried subtexts in parallel by using a generative pre-trained transformer GPT, where the text generation model includes the GPT.

In a possible implementation, the plurality of first subquery results are obtained by the server by performing, when there is no dependency relationship between the plurality of to-be-queried subtexts, first query processing on the plurality of to-be-queried subtexts in parallel by using a GPT, where the text generation model includes the GPT.

In a possible implementation, the plurality of first subquery results are obtained by the server by performing, when there is a dependency relationship between the plurality of to-be-queried subtexts, first query processing on the plurality of to-be-queried subtexts by using a GPT, where first query processing on at least two of the plurality of to-be-queried subtexts is performed in parallel, a quantity of the at least two to-be-queried subtexts is less than a quantity of the plurality of to-be-queried subtexts, and the text generation model includes the GPT.

In a possible implementation, when there is a dependency relationship between the plurality of to-be-queried subtexts, the at least two to-be-queried subtexts are determined by the server from the plurality of to-be-queried subtexts based on the dependency relationship.

In a possible implementation, when there is a dependency relationship between the plurality of to-be-queried subtexts, the plurality of first subquery results are output by the server to the terminal based on the dependency relationship.

According to an eighth aspect, a chip is provided. The chip is used in an electronic device, and the chip includes one or more processors. The processor is configured to invoke computer instructions to enable the electronic device to perform the text processing method according to any one of the first aspect or the implementations of the first aspect, or enable the electronic device to perform the text processing method according to any one of the second aspect or the implementations of the second aspect.

According to a ninth aspect, a computer-readable storage medium is provided. The computer-readable storage medium stores computer program code. When the computer program code is run by an electronic device, the electronic device is enabled to perform the text processing method according to any one of the first aspect or the implementations of the first aspect, or the electronic device is enabled to perform the text processing method according to any one of the second aspect or the implementations of the second aspect.

According to a tenth aspect, a computer program product is provided. The computer program product includes computer program code. When the computer program code is run by an electronic device, the electronic device is enabled to perform the text processing method according to any one of the first aspect or the implementations of the first aspect, or the electronic device is enabled to perform the text processing method according to any one of the second aspect or the implementations of the second aspect.

In embodiments of this application, query operation information is generated based on a to-be-queried text, a plurality of to-be-queried subtexts are determined based on the query operation information, and when first query processing is then performed on the plurality of to-be-queried subtexts by using a text generation model, first query processing is performed on at least two of the plurality of to-be-queried subtexts in parallel. This shortens time for performing first query processing on the plurality of to-be-queried subtexts by the text generation model, thereby shortening time for generating a plurality of first subquery results, and improving efficiency of generating the plurality of first subquery results. The related technology in which the to-be-queried text is directly processed by using the text generation model is not required. This resolves a problem in the related technology that time for generating a reply text by using the text generation model is long and efficiency is low.

### BRIEF DESCRIPTION OF DRAWINGS

FIG. 1 is a diagram of a structure of an electronic device according to an embodiment of this application;
FIG. 2 is a block diagram of a software structure of an electronic device 100 according to an embodiment of this application;
FIG. 3 is a working diagram of a model decoder in a large model architecture in a text generation method according to an embodiment of this application;
FIG. 4 is a schematic flowchart of a text generation method according to an embodiment of this application;
FIG. 5A is a diagram of a structure of a target data structure in a text generation method according to an embodiment of this application;
FIG. 5B is a diagram of query operation information in a text generation method according to an embodiment of this application;
FIG. 6A is a diagram of a structure of a target data structure in another text generation method according to an embodiment of this application;
FIG. 6B is a diagram of query operation information in another text generation method according to an embodiment of this application;
FIG. 7A is a diagram of a structure of a target data structure in still another text generation method according to an embodiment of this application;
FIG. 7B is a diagram of query operation information in still another text generation method according to an embodiment of this application;
FIG. 8 is a schematic flowchart of another text generation method according to an embodiment of this application;
FIG. 9A to FIG. 9C are a schematic flowchart of still another text generation method according to an embodiment of this application;
FIG. 10 is a diagram of a structure of an initial operation information generation model in a text generation method according to an embodiment of this application;
FIG. 11 is a diagram of a UI interface in a text generation method according to an embodiment of this application;
FIG. 12 is a schematic flowchart of a text generation method according to another embodiment of this application;
FIG. 13 is a diagram of displaying a plurality of first subquery results in a text generation method according to an embodiment of this application;
FIG. 14 is a diagram of displaying a plurality of first subquery results in another text generation method according to an embodiment of this application;
FIG. 15 is a diagram of displaying a plurality of first subquery results in a text generation method according to another embodiment of this application;
FIG. 16 is a diagram of displaying a plurality of first subquery results in another text generation method according to another embodiment of this application;
FIG. 17 is a schematic flowchart of a text generation method according to still another embodiment of this application;
FIG. 18 is a diagram of a working procedure of a text generation system according to still another embodiment of this application;
FIG. 19 is a diagram of a structure of a text processing apparatus according to an embodiment of this application; and
FIG. 20 is a diagram of a structure of an electronic device according to another embodiment of this application.

### DESCRIPTION OF EMBODIMENTS

The following describes the technical solutions in embodiments of this application with reference to the accompanying drawings in embodiments of this application.

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more.

Terms "first", "second", and "third" mentioned below are merely used for a purpose of description, and shall not be understood as an indication or an implication of relative importance or an implicit indication of a quantity of indicated technical features. Therefore, the features defined with "first", "second", and "third" may explicitly or implicitly include one or more of the features.

Embodiments of this application provide an electronic device. The electronic device is configured to perform the text processing method provided in this application. In some embodiments of this application, the electronic device may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like, or may be another device or apparatus that can perform text processing. A specific type of the electronic device is not limited in embodiments of this application.

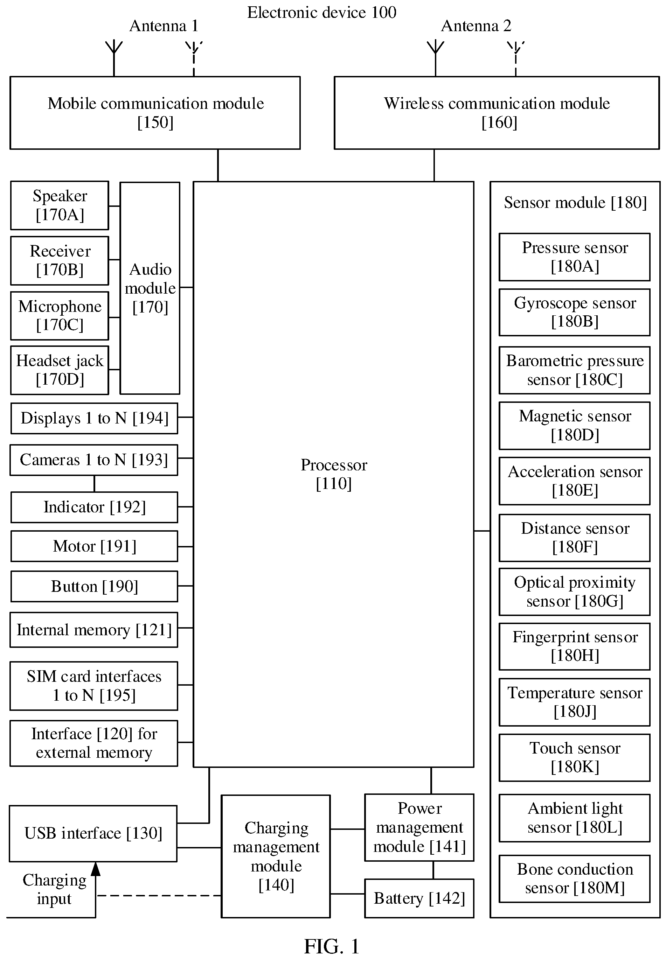

For example, FIG. 1 is a diagram of a structure of an electronic device according to an embodiment of this application.

As shown in FIG. 1, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The processor 110 communicates with the display 194 through the DSI interface, to implement a display function of the electronic device 100.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Structures of the antenna 1 and the antenna 2 in FIG. 1 are merely an example. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The electronic device 100 implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The touch sensor 180K is also referred to as a "touch panel". The touch sensor 180K may be disposed on the display 194. A touchscreen formed by the touch sensor 180K and the display 194 is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a location different from that of the display 194.

The button 190 includes a power button, a volume button, and the like. The button 190 may be a mechanical button, or may be a touch-sensitive button. The electronic device 100 may receive a button input, and generate a button signal input related to a user setting and function control of the electronic device 100.

A software system of the electronic device 100 may use a layered architecture, an event-driven architecture, a microkernel architecture, a microservice architecture, or a cloud architecture. In embodiments of this application, an Android (Android) system with a layered architecture is used as an example to describe a software structure of the electronic device 100.

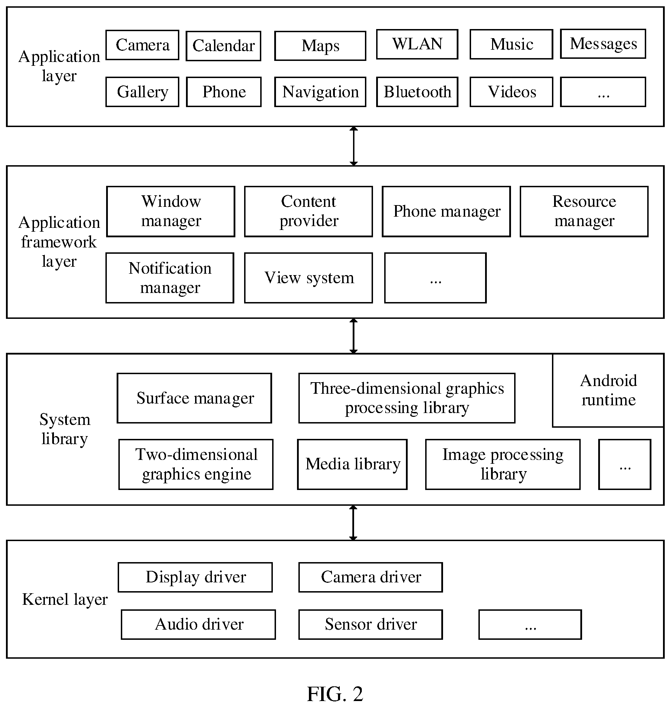

FIG. 2 is a block diagram of the software structure of the electronic device 100 according to an embodiment of this application.

It should be understood that, in a layered architecture, software may be divided into several layers, and each layer has a clear role and task. Communication between layers may be performed through a software interface.

As shown in FIG. 2, an Android system may be divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audios, calls that are made and received, a browsing history, a bookmark, a phone book, and the like.

The view system includes a visual control, for example, a control for displaying a text and a control for displaying an image. The view system may be used to construct an application. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, may be configured to convey a notification message, and may automatically disappear after a short pause without requiring a user interaction. For example, the notification manager is configured to: notify download completion, provide a message notification, and the like. The notification manager may alternatively be a notification that appears in a top status bar of the system in a form of graph or scroll bar text, for example, a notification of an application running on a background, or may be a notification that appears on the screen in a form of dialog window. For example, text information is prompted in the status bar, an alert tone is made, the terminal device vibrates, or an indicator blinks.

The Android runtime includes a core library and a virtual machine. The Android runtime is used to schedule and manage the Android system.

The core library includes two parts: a function that needs to be invoked in java language and a core library of Android.

The application layer and the application framework layer run on the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, an open graphics library for embedded systems (open graphics library for embedded systems, OpenGL ES)), and a 2D graphics engine (for example, a skia graphics library (skia graphics library, SGL)).

The surface manager is configured to manage a display subsystem and provide fusion of 2D and 3D layers for a plurality of applications.

The media library supports playback and recording of a plurality of audio formats, playback and recording of a plurality of video formats, and static image files. The media library may support a plurality of audio and video encoding formats, for example, MPEG-4, H.264, moving picture experts group audio layer III (moving picture experts group audio layer III, MP3), advanced audio coding (advanced audio coding, AAC), adaptive multi-rate (adaptive multi-rate, AMR), joint photographic experts group (joint photographic experts group, JPG), and portable network graphics (portable network graphics, PNG).

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For ease of understanding, in embodiments of this application, the electronic device shown in FIG. 1 and FIG. 2 is used as an example to describe in detail, with reference to the accompanying drawings and an application scenario, the text processing method provided in embodiments of this application.

Currently, text generation models are widely used in the field of natural language processing. The text generation model may be a large model, and the large model is a neural network model including ultra-large-scale parameters. The large model may be, for example, a generative pre-trained transformer (Generative Pre-Trained Transformer, GPT). In a large model architecture, an autoregressive decoder is used for model decoding, and the autoregressive decoder generates a reply text in an autoregressive manner. Generation of a next word depends on a preceding text result, and each word in the reply text can only be generated one by one.

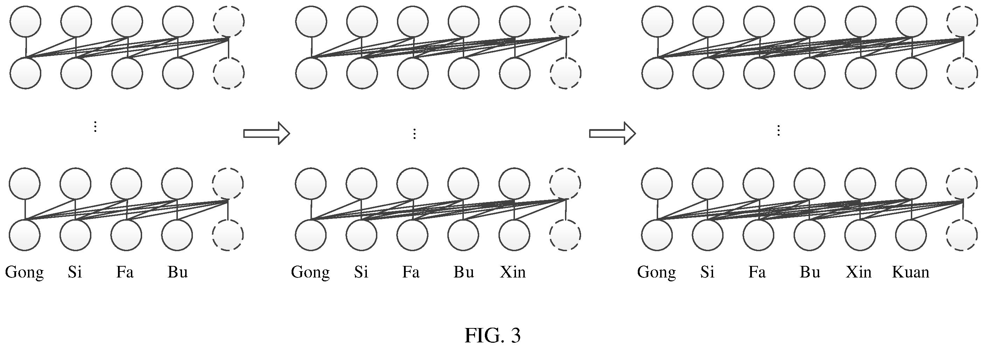

For example, as shown in FIG. 3, a model decoder in the large model architecture may first sequentially generate four words: "Gong", "Si", "Fa", and "Bu". Then, generation of a fifth word needs to depend on the generated four words: "Gong", "Si", "Fa", and "Bu". It is assumed that the generated fifth word is "Xin". In this case, generation of a sixth word needs to depend on the generated five words: "Gong", "Si", "Fa", "Bu", and "Xin". It is assumed that the generated sixth word is "Kuan". In this case, generation of a seventh word needs to depend on the generated five words: "Shi", "Fa", "Bu", "Xin", and "Kuan". A length of a processing window for generating the reply text may be 5, and the length indicates that a maximum quantity of generated words that can be depended on when an N^{th} word is generated is 5. N is a positive integer.

When the large model is used in a text generation technology in the field of natural language processing, a question entered by a user is usually received, and the question is input into the large model. The large model may understand and analyze the question to generate a reply text, and then present the reply text to the user. However, when processing the user question, the large model generates the reply text word by word. As a result, time for generating the reply text is long and efficiency is low.

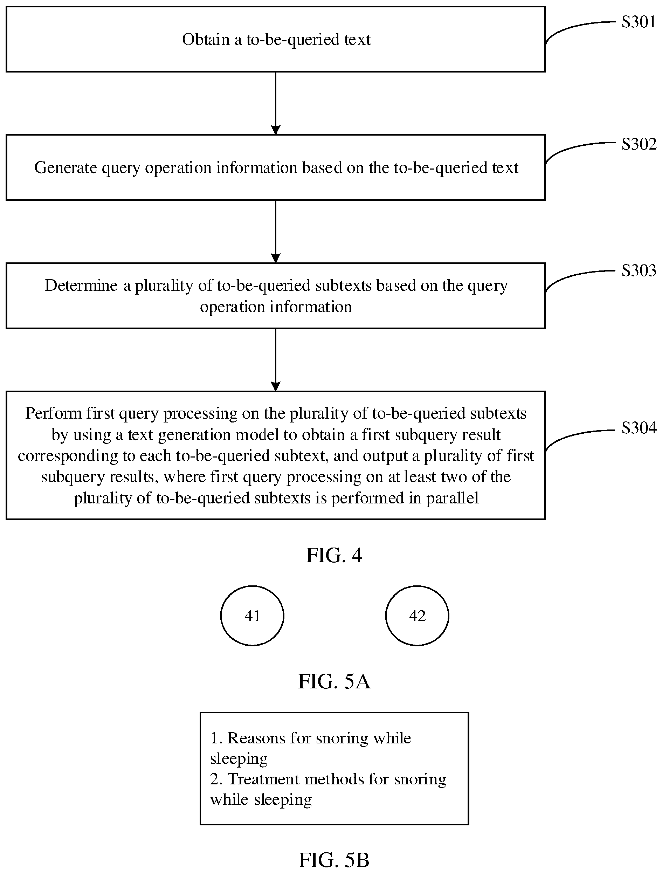

In view of this, an embodiment of this application provides a text generation method. The method is applied to an electronic device. The electronic device may be a device having a text processing function. For example, the electronic device may be a server or a terminal. As shown in FIG. 4, the text generation method may be implemented by using S301 to S304. The steps are described below.

S301: Obtain a to-be-queried text.

The to-be-queried text is a text used to express an information requirement or answer a question. The to-be-queried text may be referred to as a query or a query text.

In this embodiment of this application, the to-be-queried text may be obtained in response to an input operation of a user. Certainly, the to-be-queried text may alternatively be sent by another device to the electronic device; or the to-be-queried text may be automatically generated by the electronic device based on an application scenario. In this way, the electronic device may obtain the to-be-queried text in at least one of the foregoing manners. This improves flexibility of obtaining the to-be-queried text.

For example, at a time point t1, the electronic device obtains an initial to-be-queried text in response to the input operation of the user, and uses the initial to-be-queried text as the to-be-queried text. A first historical to-be-queried text that is before the time point t1 and that is within target duration from the time point t1 may be further obtained, and the first historical to-be-queried text and the initial to-be-queried text are combined to obtain the to-be-queried text. The target duration may be, for example, 1 min. Certainly, a plurality of historical first subquery results corresponding to the first historical to-be-queried text may alternatively be obtained, and the first historical to-be-queried text, the initial to-be-queried text, and the plurality of historical first subquery results are combined to obtain the to-be-queried text. Alternatively, a second historical to-be-queried text that has a semantic association with the initial to-be-queried text may be obtained from a database based on the initial to-be-queried text, and the initial to-be-queried text and the second historical to-be-queried text are combined to obtain the to-be-queried text.

In a feasible implementation, the to-be-queried text may be a search keyword or phrase entered by the user, and is used to find a related web page, document, or other information through searching.

For example, the to-be-queried text may be a search keyword entered by the user. The search keyword may be a product name or a brand name entered by the user, to search for a specific product or products of different brands. For example, the search keyword may be specifically "TV of a brand". The search keyword may alternatively be a name of a movie or a TV series, to query information about the movie or the TV series. For example, the name of the TV series may be "Three Lives XX". The search keyword may alternatively be a "person name". For example, the user may enter a name of a public figure or an artist to search for information about their life, achievements, works, and the like. The search keyword may alternatively be geographical location information. For example, the user may enter an address location or a landmark name to search for basic information about the location.

In a feasible implementation, the to-be-queried text may alternatively be a question entered by the user, and is used to obtain an answer to a specific topic or question.

For example, the to-be-queried text may be a question entered by the user. For example, the question may be "Introduce the four great inventions of China", or the question may be "Introduce Chinese cuisine".

S302: Generate query operation information based on the to-be-queried text.

The query operation information represents a query plan for querying the to-be-queried text, and the query operation information includes a plurality of query steps for querying the to-be-queried text.

In this embodiment of this application, semantic analysis may be performed on the to-be-queried text to obtain related information of the to-be-queried text, and the query operation information is generated based on the to-be-queried text and the related information of the to-be-queried text. Certainly, a pre-trained operation information generation model may be invoked, and the to-be-queried text is processed by using the operation information generation model, to obtain the query operation information.

In a feasible implementation, the query operation information may be specifically understood as a natural language form of a target data structure representing the query plan. The target data structure may be presented in a form of graph, table, block diagram, or the like. The target data structure may be a directed acyclic graph (directed acyclic graph, DAG), which is referred to as a DAG for short. In the DAG, a node represents a step in a query plan for querying a to-be-queried text, and an edge in the DAG represents a dependency relationship between these steps. For example, the target data structure may be classified into three types. The following describes the three types of target data structures in detail.

A first type of target data structure is a data structure representing that there is no dependency relationship between steps in the query plan, and may be referred to as a "specific data structure".

For example, the query text is "What to do if you snore while sleeping", and the target data structure is a query plan representing a query "What to do if you snore while sleeping". The target data structure is shown in FIG. 5A. The target data structure includes a node 41 and a node 42. The node 41 and the node 42 represent steps in the query plan, and there is no dependency relationship between the node 41 and the node 42. A step represented by the node 41 is "Reasons for snoring while sleeping", and a step represented by the node 42 is "Treatment methods for snoring while sleeping". The query operation information is shown in FIG. 5B, and may be specifically "1. Reasons for snoring while sleeping. 2. Treatment methods for snoring while sleeping".

A second type of target data structure is a data structure representing that there is a dependency relationship between steps in the query plan and a plurality of steps depend on one step, and may be referred to as a "general-specific data structure".

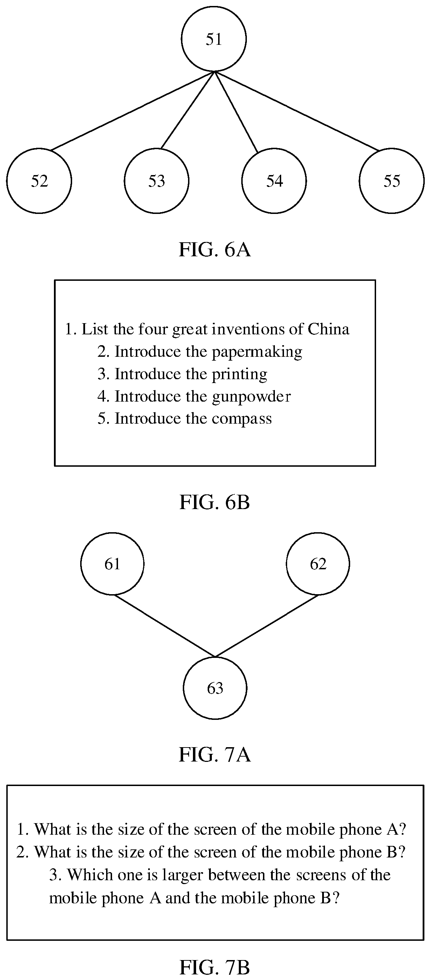

For example, the query text is "Introduce the four great inventions of China", and the target data structure is a query plan representing a query "Introduce the four great inventions of China". The target data structure is shown in FIG. 6A, and includes a node 51, a node 52, a node 53, a node 54, and a node 55. The node 51, the node 52, the node 53, the node 54, and the node 55 represent steps in the query plan, and the node 52, the node 53, the node 54, and the node 55 all depend on the node 51. The node 51 represents "List the four great inventions of China", the node 52 represents "Introduce the papermaking", the node 53 represents "Introduce the printing", the node 54 represents "Introduce the gunpowder", and the node 55 represents "Introduce the compass". The query operation information is shown in FIG. 6B, and may be specifically "1. List the four great inventions of China. 2. Introduce the papermaking. 3. Introduce the printing. 4. Introduce the gunpowder. 5. Introduce the compass".

A third type of target data structure is a data structure representing that there is a dependency relationship between steps in the query plan and one step depends on a plurality of steps, and may be referred to as a "specific-general data structure".

For example, the query text is "Which one is larger between the screens of the mobile phone A and the mobile phone B", and the target data structure is a query plan representing a query "Which one is larger between the screens of the mobile phone A and the mobile phone B". The target data structure is shown in FIG. 7A, and includes a node 61, a node 62, and a node 63. The node 61, the node 62, and the node 63 represent steps in the query plan, and the node 63 depends on the node 61 and the node 62. The node 61 represents "What is the size of the screen of the mobile phone A", the node 62 represents "What is the size of the screen of the mobile phone B", and the node 63 represents "Which one is larger between the screens of the mobile phone A and the mobile phone B". The query operation information is shown in FIG. 7B, and may be specifically "1. What is the size of the screen of the mobile phone A? 2. What is the size of the screen of the mobile phone B? 3. Which one is larger between the screens of the mobile phone A and the mobile phone B?".

In addition, the target data structure may alternatively be obtained by combining at least two of the "specific data structure", the "general-specific data structure", and the "specific-general data structure". For example, the target data structure may be a "general-specific-general data structure" or a "specific-general-specific data structure".

In the foregoing solution, the query operation information generated based on the to-be-queried text not only includes original semantics of the to-be-queried text, but also includes the related information of the to-be-queried text. This improves richness and integrity of the generated query operation information.

S303: Determine a plurality of to-be-queried subtexts based on the query operation information.

The query operation information includes a plurality of query steps for querying the to-be-queried text, and the plurality of query steps not only depend on semantic information of the to-be-queried text, but also depend on the related information of the to-be-queried text.

In this embodiment of this application, each query step may be extracted from the query operation information, the extracted query step is used as an initial to-be-queried subtext, and the to-be-queried subtext is determined based on the initial to-be-queried subtext.

Specifically, the initial to-be-queried subtext may be used as the to-be-queried subtext. Further, second query processing may be performed on the initial to-be-queried subtext to obtain a second subquery result, and the initial to-be-queried subtext and the second subquery result are used as the to-be-queried subtext. The second query processing is used to obtain, from an internet, a reply text corresponding to the initial to-be-queried subtext, or is used to obtain, from an internet, a text that supplements the initial to-be-queried subtext (namely, an expanded text of the initial to-be-queried subtext).

For example, as shown in FIG. 5B, the query operation information includes two query steps: "1. Reasons for snoring while sleeping" and "2. Treatment methods for snoring while sleeping". The query steps may be used as initial to-be-queried subtexts. In this case, the 1^{st} initial to-be-queried subtext is "1. Reasons for snoring while sleeping", and the 2^{nd} initial to-be-queried subtext is "2. Treatment methods for snoring while sleeping". For example, the initial to-be-queried subtext is used as the to-be-queried subtext. There are two to-be-queried subtexts, the 1^{st} to-be-queried subtext is "1. Reasons for snoring while sleeping", and the 2^{nd} to-be-queried subtext is "2. Treatment methods for snoring while sleeping".

For example, second query processing is performed on the initial to-be-queried subtext to obtain the second subquery result, and the initial to-be-queried subtext and the second subquery result are used as the to-be-queried subtext. Second query processing may be performed on the 1^{st} initial to-be-queried subtext "1. Reasons for snoring while sleeping" to obtain a 1^{st} second subquery result. For example, the 1^{st} second subquery result may be "Incorrect sleeping position and high body fat percentage". "1. Reasons for snoring while sleeping" and "Incorrect sleeping position and high body fat percentage" may be combined to obtain the 1^{st} to-be-queried subtext. According to the foregoing same method, second query processing is performed on the 2^{nd} initial to-be-queried subtext "2. Treatment methods for snoring while sleeping" to obtain a 2^{nd} second subquery result. For example, the 2^{nd} second subquery result may be "Change the sleeping position, which may be specifically..." and "Lose weight, which may be specifically...". "2. Treatment methods for snoring while sleeping", "Change the sleeping position, which may be specifically...", and "Lose weight, which may be specifically..." may be combined to obtain the 2^{nd} to-be-queried subtext.

In the foregoing solution, the plurality of to-be-queried subtexts are determined based on the query operation information, which is clearly different from simply splitting the to-be-queried text into a plurality of to-be-queried subtexts. The plurality of to-be-queried subtexts determined based on the query operation information not only include the original semantics of the to-be-queried text, but also include the related information of the to-be-queried text. This expands the to-be-queried text, improves richness and integrity of the obtained plurality of to-be-queried subtexts, and further improves richness, integrity, and accuracy of a reply text (namely, a plurality of first subquery results) subsequently determined based on the plurality of to-be-queried subtexts.

S304: Perform first query processing on the plurality of to-be-queried subtexts by using a text generation model to obtain a first subquery result corresponding to each to-be-queried subtext, and output a plurality of first subquery results, where first query processing on at least two of the plurality of to-be-queried subtexts is performed in parallel.

The first query processing is different from the second query processing. The at least two to-be-queried subtexts that need to be processed in parallel may be simultaneously input into the text generation model, or may be sequentially input into the text generation model.

In this embodiment of this application, first query processing may be performed on the plurality of to-be-queried subtexts in parallel by using the text generation model, to obtain the first subquery result corresponding to each to-be-queried subtext, where a quantity of the at least two to-be-queried subtexts is the same as a quantity of the plurality of to-be-queried subtexts. The text generation model may be a GPT.

For example, the quantity of the plurality of to-be-queried subtexts may be two. The 1^{st} to-be-queried subtext is "1. Reasons for snoring while sleeping", and the 2^{nd} to-be-queried subtext is "2. Treatment methods for snoring while sleeping". "1. Reasons for snoring while sleeping" and "2. Treatment methods for snoring while sleeping" may be input into the text generation model, so that the text generation model performs first query processing on "1. Reasons for snoring while sleeping" and "2. Treatment methods for snoring while sleeping" in parallel, to obtain a first subquery result corresponding to "1. Reasons for snoring while sleeping", for example, "Obesity, ..., Sleeping position problem, ..., Muscle relaxation, ..., and Excessive fatigue", and obtain a first subquery result corresponding to "2. Treatment methods for snoring while sleeping", for example, "Lose weight, ..., Change the sleeping position, ..., Avoid drinking, ..., and Take a rest, ...".

Certainly, whether there is a dependency relationship between the plurality of to-be-queried subtexts may be further considered. When there is no dependency relationship between the plurality of to-be-queried subtexts, first query processing may be performed on the plurality of to-be-queried subtexts in parallel to obtain the first subquery result corresponding to each to-be-queried subtext, where the quantity of the at least two to-be-queried subtexts is the same as the quantity of the plurality of to-be-queried subtexts. When there is a dependency relationship between the plurality of to-be-queried subtexts, at least two to-be-queried subtexts may be determined from the plurality of to-be-queried subtexts, and a quantity of the at least two to-be-queried subtexts is less than the quantity of the plurality of to-be-queried subtexts.

Specifically, when there is a dependency relationship between the plurality of to-be-queried subtexts, a query operation rank of each to-be-queried subtext in the plurality of to-be-queried subtexts may be determined based on the dependency relationship, and then whether there are same query operation ranks in the plurality of query operation ranks is determined. When there are same query operation ranks in the plurality of query operation ranks, at least two to-be-queried subtexts are determined from the plurality of to-be-queried subtexts, where query operation ranks of the at least two to-be-queried subtexts are the same, and a quantity of the at least two to-be-queried subtexts is less than the quantity of the plurality of to-be-queried subtexts. When there are no same query operation ranks in the plurality of query operation ranks, at least two to-be-queried subtexts may be randomly determined from the plurality of to-be-queried subtexts, where a quantity of the at least two to-be-queried subtexts is less than the quantity of the plurality of to-be-queried subtexts.

For example, there is a dependency relationship between the plurality of to-be-queried subtexts. For example, the quantity of the plurality of to-be-queried subtexts may be five, a 1^{st} to-be-queried subtext is "1. List the four great inventions of China", a 2^{nd} to-be-queried subtext is "2. Introduce the papermaking", a 3^{rd} to-be-queried subtext is "3. Introduce the printing", a 4^{th} to-be-queried subtext is "4. Introduce the gunpowder", and a 5^{th} to-be-queried subtext is "5. Introduce the compass". The dependency relationship represents that the 2^{nd} to 5^{th} to-be-queried subtexts depend on the 1^{st} to-be-queried subtext. It is determined, based on the dependency relationship, that a query operation rank of the 1^{st} to-be-queried subtext is "1", and query operation ranks of the 2^{nd} to 5^{th} to-be-queried subtexts are all "2". The 2^{nd} to 5^{th} to-be-queried subtexts whose query operation ranks are all "2" may be used as to-be-queried subtexts that need to be processed in parallel by the text generation model, and the quantity of the at least two to-be-queried subtexts is four. The 1^{st} to-be-queried subtext may be first input into the text generation model. When the text generation model ends first query processing on the 1^{st} to-be-queried subtext, or in a process in which the text generation model performs first query processing on the 1^{st} to-be-queried subtext, the 2^{nd} to 5^{th} to-be-queried subtexts are input into the text generation model, so that the text generation model can perform first query processing on the 2^{nd} to 5^{th} to-be-queried subtexts in parallel, to finally obtain the first subquery result corresponding to each to-be-queried subtext.

In this embodiment of this application, at least two to-be-queried subtexts whose importance degrees satisfy an importance degree threshold may alternatively be determined from the plurality of to-be-queried subtexts based on importance degrees of the to-be-queried subtexts, where a quantity of the at least two to-be-queried subtexts is less than the quantity of the plurality of to-be-queried subtexts.

It should be noted that, in a related technology, the text generation model needs to understand and analyze the to-be-queried text to generate the reply text word by word. The to-be-queried text may be complex, and a large amount of time is consumed for generating the reply text. However, in this embodiment of this application, the text generation model may first generate the query operation information based on the to-be-queried text, and then determine the plurality of to-be-queried subtexts based on the query operation information. Then, processing on at least two of the plurality of to-be-queried subtexts is performed in parallel. In other words, the text generation model may generate, in parallel, first subquery results corresponding to the at least two to-be-queried subtexts. This shortens time consumed for generating a plurality of first query results (reply texts), and improves efficiency of generating the plurality of first query results (reply texts).

In this embodiment of this application, the first subquery result corresponding to each to-be-queried subtext may be output in a streaming output manner or a non-streaming output manner. The streaming output manner means that in a process in which the text generation model performs first query processing on the plurality of to-be-queried subtexts, each time the text generation model outputs a word, the electronic device immediately outputs the word, without waiting for a subsequently generated word (in other words, the text generation model does not need to output a complete answer, and each time the text generation model outputs a word, the electronic device outputs the generated word). The non-streaming output manner means that the electronic device outputs the plurality of first subquery results only after the text generation model ends first query processing on the plurality of to-be-queried subtexts to obtain the plurality of first subquery results (in other words, the electronic device outputs a complete answer only after the text generation model outputs the complete answer).

When the electronic device is a terminal, the plurality of first subquery results may be output to a display for display in a streaming output manner or a non-streaming output manner. When the electronic device is a server, the server may send the plurality of first subquery results to a terminal in a streaming output manner or a non-streaming output manner, so that the terminal can display the plurality of first subquery results on a display. The display is a display of the terminal. Certainly, the display may alternatively be a display externally connected to the terminal.

In the foregoing solution, the streaming output manner or the non-streaming output manner may be flexibly selected based on an actual application scenario, to output the first subquery result corresponding to each to-be-queried subtext. This improves flexibility of outputting the plurality of first subquery results.

When there is the dependency relationship between the plurality of to-be-queried subtexts, the plurality of first subquery results may be output based on the dependency relationship in the streaming output manner or the non-streaming output manner.

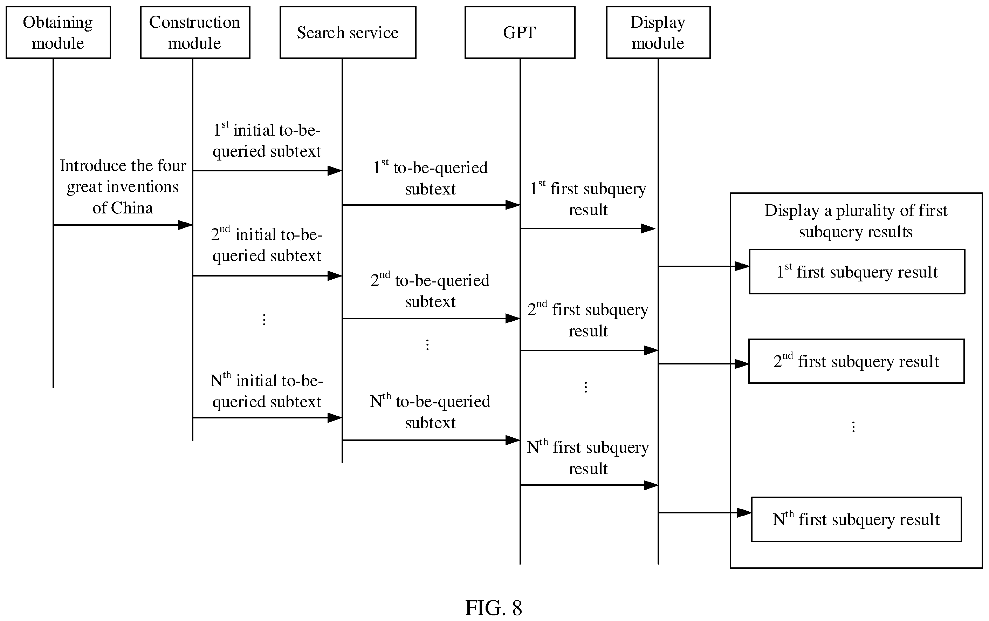

For example, the electronic device may be a terminal, and the terminal may display a user interface (User Interface, UI) of a voice assistant or a generative search engine in response to a start operation performed by the user on the voice assistant or the generative search engine. The user may perform an input operation in the UI interface. As shown in FIG. 8, an obtaining module of the terminal may obtain a to-be-queried text in response to the input operation of the user. For example, the to-be-queried text may be "Introduce the four great inventions of China". Then, the to-be-queried text is input into a construction module. The construction module may determine query operation information based on the to-be-queried text, and determine a plurality of initial to-be-queried subtexts based on the query operation information. Then, second query processing may be performed on the plurality of initial to-be-queried subtexts in parallel by using a search service, to obtain a second subquery result corresponding to each initial to-be-queried subtext. For each initial to-be-queried subtext, the initial to-be-queried subtext and the second subquery result corresponding to the initial to-be-queried subtext are combined to obtain a to-be-queried subtext. For example, a quantity of the plurality of to-be-queried subtexts is five. A dependency relationship represents that 2^{nd} to 5^{th} to-be-queried subtexts depend on a 1^{st} to-be-queried subtext. After the five to-be-queried subtexts are input into a GPT, five first subquery results output by the GPT may be output to a display interface of a display of the terminal for display based on the dependency relationship. Because the 2^{nd} to 5^{th} to-be-queried subtexts depend on the 1^{st} to-be-queried subtext, a 1^{st} first subquery result corresponding to the 1^{st} to-be-queried subtext displayed in the display interface is arranged before first subquery results corresponding to the 2^{nd} to 5^{th} to-be-queried subtexts.

In the foregoing solution, when there is the dependency relationship between the plurality of to-be-queried subtexts, the plurality of first subquery results may be output based on the dependency relationship in the streaming output manner or the non-streaming output manner. This ensures readability and coherence of the plurality of output first subquery results, and improves user experience.

According to the text processing method provided in this embodiment of this application, a to-be-queried text is obtained; query operation information is generated based on the to-be-queried text, where the query operation information represents a query plan for querying the to-be-queried text; a plurality of to-be-queried subtexts are determined based on the query operation information; and first query processing is performed on the plurality of to-be-queried subtexts by using a text generation model to obtain a first subquery result corresponding to each to-be-queried subtext, and a plurality of first subquery results are output, where first query processing on at least two of the plurality of to-be-queried subtexts is performed in parallel. In this way, when the plurality of to-be-queried subtexts are determined based on the query operation information generated based on the to-be-queried text, and then first query processing is performed on the plurality of to-be-queried subtexts by using the text generation model, first query processing is performed on the at least two of the plurality of to-be-queried subtexts in parallel. This shortens time for performing first query processing on the plurality of to-be-queried subtexts by the text generation model, thereby shortening time for generating the plurality of first subquery results, and improving efficiency of generating the plurality of first subquery results. The related technology in which the to-be-queried text is directly processed by using the text generation model is not required. This resolves a problem in the related technology that time for generating a reply text by using the text generation model is long and efficiency is low.

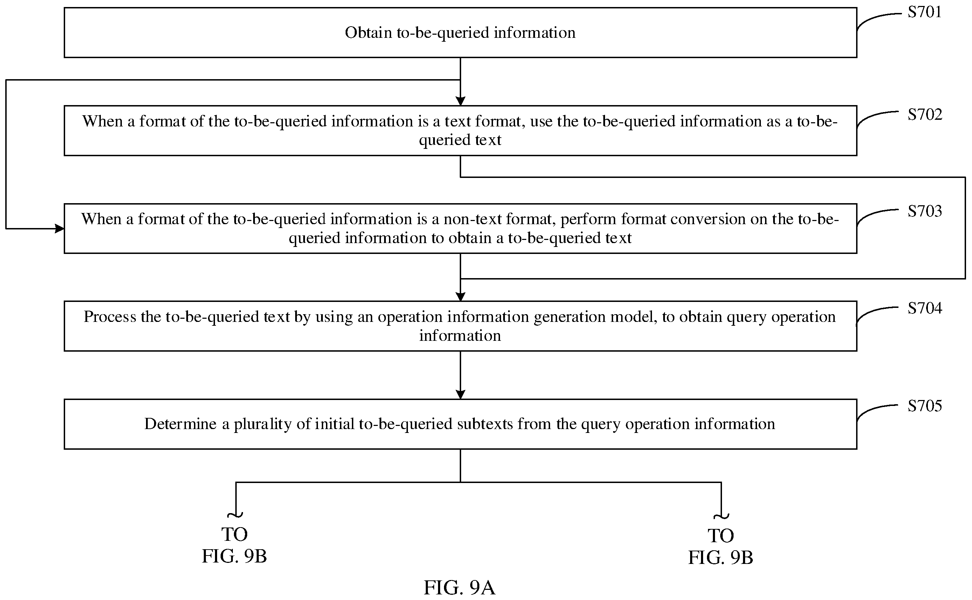

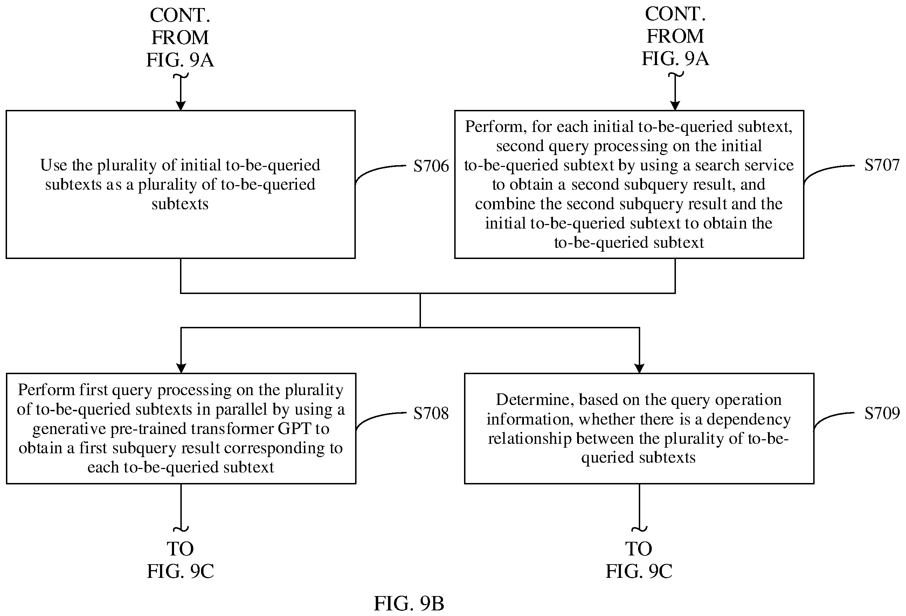

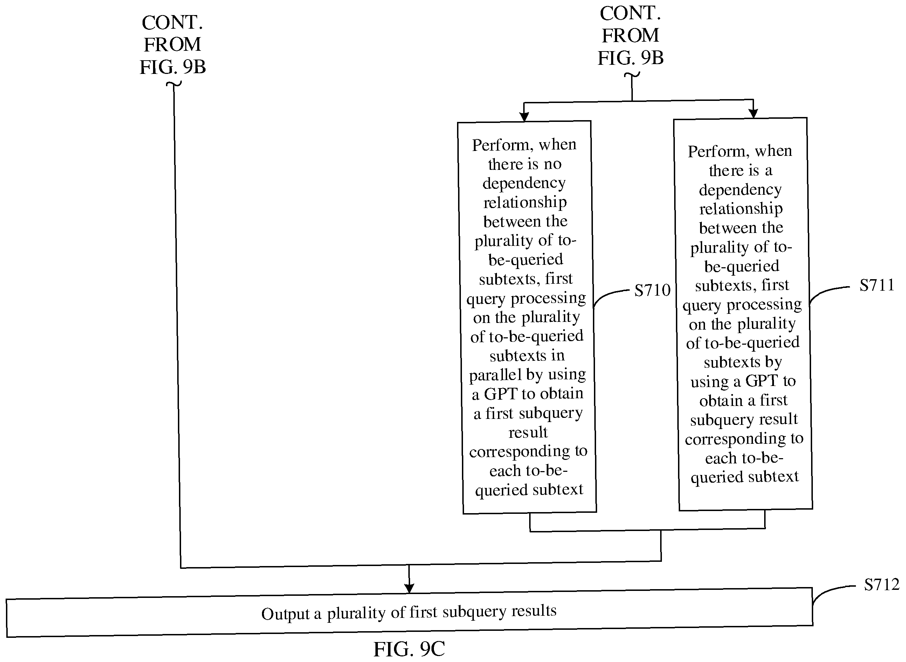

Based on the foregoing embodiment, an embodiment of this application provides a text generation method, which is applied to an electronic device. For example, the electronic device may be a device having a text processing function. For example, the electronic device may be a server or a terminal. As shown in FIG. 9A to FIG. 9C, the text generation method may be implemented by using S701 to S712. The steps are described below.

It should be noted that S301 in the foregoing embodiment may be implemented by using S701 and S702, or may be implemented by using S701 and S703.

S701: Obtain to-be-queried information.

A format of the to-be-queried information includes but is not limited to at least one of formats such as a text format, an image format, or an audio format.

In this embodiment of this application, the to-be-queried information may be sent by another device to the electronic device. Certainly, the to-be-queried information may alternatively be obtained in response to an input operation of a user. The to-be-queried information may alternatively be generated by the electronic device based on an actual application scenario. Therefore, the to-be-queried information may be obtained in at least one of the foregoing manners. This improves flexibility of obtaining the to-be-queried information.

For example, the electronic device may be a terminal, and the user may perform the input operation in a UI interface of a display of the terminal. The terminal obtains the to-be-queried information in response to the input operation of the user. Certainly, the electronic device may alternatively be a server, and the to-be-queried information may be obtained by a terminal and then sent to the server.

In this embodiment of this application, a to-be-queried text may be determined based on the to-be-queried information. Specifically, whether format conversion needs to be performed on the to-be-queried information may be determined based on the format of the to-be-queried information, to determine the to-be-queried text.

It should be noted that S702 or S703 may be performed after S701.

S702: When the format of the to-be-queried information is the text format, use the to-be-queried information as the to-be-queried text.

In this embodiment of this application, the format of the to-be-queried information may be first detected. When the format of the to-be-queried information is the text format, the to-be-queried information may be used as the to-be-queried text, to facilitate subsequent processing on the to-be-queried text.

S703: When the format of the to-be-queried information is a non-text format, perform format conversion on the to-be-queried information to obtain the to-be-queried text.

In this embodiment of this application, when the format of the to-be-queried information is at least one of other non-text formats such as the image format or the audio format, format conversion may be performed on the to-be-queried information to obtain the to-be-queried text.

For example, when the format of the to-be-queried information is the image format, optical character recognition (optical character recognition, OCR) may be performed on the to-be-queried information to obtain the to-be-queried text. When the format of the to-be-queried information is the audio format, a speech-to-text conversion technology may be used to convert the to-be-queried information to obtain the to-be-queried text.

It should be noted that S302 in the foregoing embodiment may be implemented by using S704.

S704: Process the to-be-queried text by using an operation information generation model, to obtain query operation information.

The query operation information represents a query plan for querying the to-be-queried text.

In this embodiment of this application, the to-be-queried text may be input into the operation information generation model, and the operation information generation model processes the to-be-queried text and outputs the query operation information. The operation information generation model is pre-trained.

For example, the to-be-queried text may be "Introduce the four great inventions of China". The "to-be-queried text" may be input into the operation information generation model to obtain the query operation information. The query operation information is shown in FIG. 6B, and may be, for example, "1. List the four great inventions of China. 2. Introduce the papermaking. 3. Introduce the printing. 4. Introduce the gunpowder. 5. Introduce the compass".

The operation information generation model may be obtained in the following manner:
obtaining a to-be-queried sample text and sample query operation information corresponding to the to-be-queried sample text, where the sample query operation information represents a query plan for querying the to-be-queried sample text; and training an initial operation information generation model based on the to-be-queried sample text and the sample query operation information, to obtain the operation information generation model.

In this embodiment of this application, a large quantity of question pairs may be obtained, and each question pair includes a question and an answer. The question may be used as the to-be-queried sample text, and in response to an editing operation of the user, the sample query operation information is constructed based on the question and the answer, or the sample query operation information is constructed only based on the question. Alternatively, the sample query operation information may be automatically constructed by the electronic device based on the question and the answer, or automatically constructed by the electronic device only based on the question. The large quantity of question pairs may be input by the user, may be downloaded from a network in response to an obtaining instruction of the user, or may be actively downloaded by the electronic device from the network.

For example, in a question pair, a question may be "How to create a team", and an answer may be "The following several steps are required to create a team: 1. Clarify a goal and vision of the team: The team needs to have a clear goal and vision, which helps team members understand what they are doing and provides them with motivation and direction. In addition, the clear goal also helps build common values among the team members. 2. Determine team members: Determine which individuals have appropriate skills and experience to contribute to the team. During selection of team members, the personality and work style of each member are considered, and it needs to be ensured as much as possible that everyone has the opportunity to leverage their strengths in the team. 3. Establish open communication channels: Communication is the key to team success. Establishing effective communication channels can ensure that team members remain connected and share information in time. Team chat groups, mailing lists, or online collaboration tools (such as Slack or Microsoft) are good ways to establish effective communication. 4. Define clear roles and responsibilities: Defining clear roles and responsibilities can help team members understand their own responsibilities and responsibilities of other members. This helps reduce confusion and conflicts and ensures that everyone is focused on the tasks within their scope of work". The sample query operation information constructed based on the question and the answer may be, for example, "1. What are the steps to create a team? 2. How to clarify a goal and vision of the team? 3. How to determine team members? 4. How to establish open communication channels? 5. How to define clear roles and responsibilities?". Steps 2 to 5 in the sample query operation information all depend on step 1.

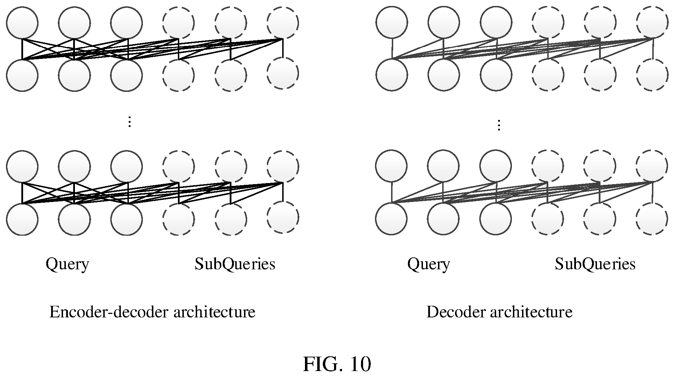

In this embodiment of this application, the initial operation information generation model may be a neural network model including ultra-large-scale parameters. As shown in FIG. 10, an architecture of the initial operation information generation model may be an "encoderdecoder architecture" or a "decoder architecture". The electronic device may input the to-be-queried sample text into the initial operation information generation model, and the initial operation information generation model may process the to-be-queried sample text to obtain the to-be-processed query operation information. Alternatively, the sample query operation information may be filled into a preset prompt template to obtain a prompt, and the prompt is input into the initial operation information generation model. The initial operation information generation model processes the prompt to obtain the to-be-processed query operation information. After the to-be-processed query operation information is obtained, a loss function may be used to compare the to-be-processed query operation information with the sample query operation information to obtain a comparison result, and a model parameter of the initial operation information generation model is continuously updated based on the comparison result, to finally obtain the operation information generation model.

It should be noted that S303 in the foregoing embodiment may be implemented by using S705 and S706, or may be implemented by using S705 and S707.

S705: Determine a plurality of initial to-be-queried subtexts from the query operation information.

In this embodiment of this application, the query operation information may be split to obtain the plurality of initial to-be-queried subtexts.

Specifically, the query operation information may be split based on a target character to obtain the plurality of initial to-be-queried subtexts. The target character may be a punctuation mark. Certainly, the query operation information may alternatively be split based on a context of the query operation information to obtain the plurality of initial to-be-queried subtexts.

For example, punctuation marks may be "." and ";". As shown in FIG. 6B, the query operation information may be split based on punctuation marks "." and ";" in the query operation information, to obtain the plurality of initial to-be-queried subtexts. A 1^{st} initial to-be-queried subtext is "1. List the four great inventions of China", a 2^{nd} initial to-be-queried subtext is "2. Introduce the papermaking", a 3^{rd} initial to-be-queried subtext is "3. Introduce the printing", a 4^{th} initial to-be-queried subtext is "4. Introduce the gunpowder", and a 5^{th} initial to-be-queried subtext is "5. Introduce the compass".

It should be noted that S706 or S707 may be performed after S705.

S706: Use the plurality of initial to-be-queried subtexts as the plurality of to-be-queried subtexts.

In the foregoing solution, the plurality of initial to-be-queried subtexts are used as the plurality of to-be-queried subtexts. This simplifies a process of obtaining the plurality of to-be-queried subtexts, and improves efficiency of obtaining the plurality of to-be-queried subtexts.

S707: Perform, for each initial to-be-queried subtext, second query processing on the initial to-be-queried subtext by using a search service to obtain a second subquery result, and combine the second subquery result and the initial to-be-queried subtext to obtain the to-be-queried subtext.

The search service is a module that is deployed on the electronic device and that is capable of collecting and sorting information.

In this embodiment of this application, second query processing may be performed on the plurality of initial to-be-queried subtexts in parallel by using the search service to obtain the second subquery result corresponding to each initial to-be-queried subtext.

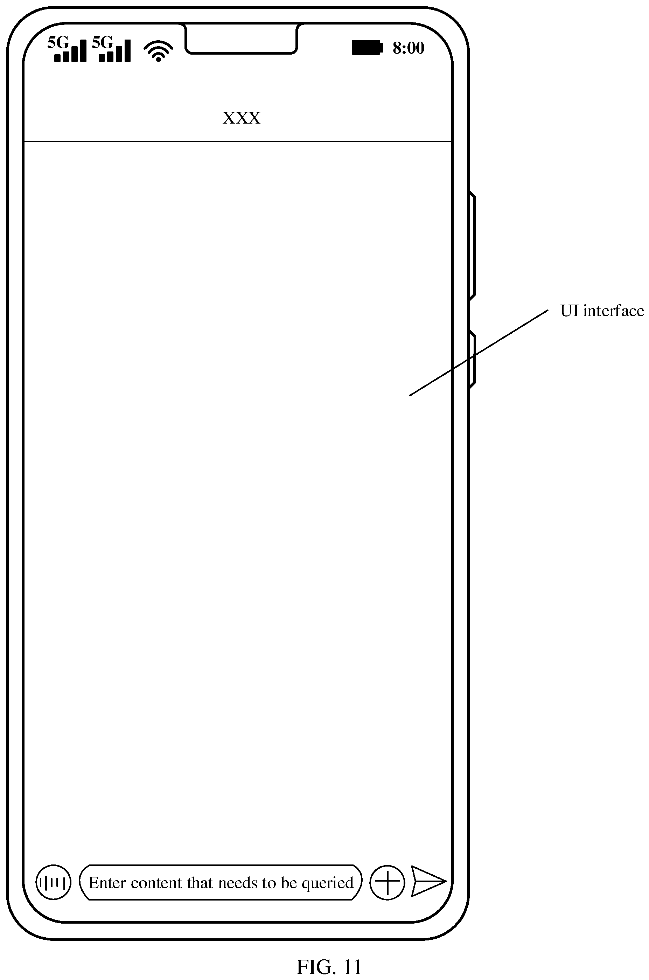

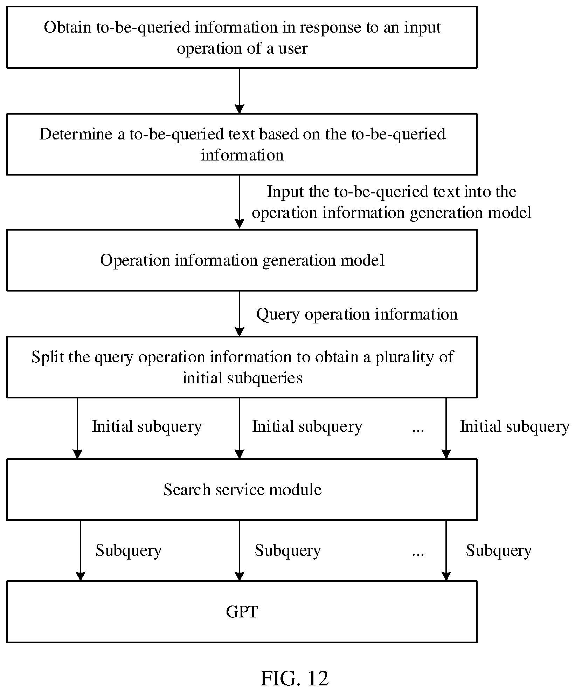

For example, as shown in FIG. 11, the electronic device is a terminal, and the user may perform an input in a UI interface of a display of the terminal. As shown in FIG. 12, the terminal may obtain to-be-queried information in response to an input operation of the user, determine a to-be-queried text based on the to-be-queried information, where the to-be-queried text may be "Introduce the four great inventions of China", and then input the to-be-queried text into an operation information generation model. The operation information generation model processes the to-be-queried text to obtain query operation information, and splits the query operation information to obtain a plurality of initial to-be-queried subtexts. A 1^{st} initial to-be-queried subtext (namely, a 1^{st} initial subquery) is "List the four great inventions of China", a second subquery result obtained by performing second query processing on the 1^{st} initial to-be-queried subtext by using a search service may be, for example, "The four great inventions of China are compass, papermaking, printing, and gunpowder", and the 1^{st} initial to-be-queried subtext and the second subquery result corresponding to the 1^{st} initial to-be-queried subtext are combined to obtain a 1^{st} to-be-queried subtext, namely, a 1^{st} subquery. A 2^{nd} initial to-be-queried subtext (namely, a 2^{nd} initial subquery) is "2. Introduce the papermaking", a second subquery result obtained by performing second query processing on the 2^{nd} initial to-be-queried subtext by using the search service may be, for example, "The papermaking, invented in the Western Han Dynasty...", and the 2^{nd} initial to-be-queried subtext and the second subquery result corresponding to the 2^{nd} initial to-be-queried subtext are combined to obtain a 2^{nd} to-be-queried subtext, namely, a 2^{nd} subquery. A 3^{rd} initial to-be-queried subtext (namely, a 3^{rd} initial subquery) is "3. Introduce the printing", a second subquery result obtained by performing second query processing on the 3^{rd} initial to-be-queried subtext by using the search service may be, for example, "The printing is one of the inventions of the ancient Chinese working people, and woodblock printing was invented in...", and the 3^{rd} initial to-be-queried subtext and the second subquery result corresponding to the 3^{rd} initial to-be-queried subtext are combined to obtain a 3^{rd} to-be-queried subtext, namely, a 3^{rd} subquery. A 4^{th} initial to-be-queried subtext (namely, a 4^{th} initial subquery) is "Introduce the gunpowder", a second subquery result obtained by performing second query processing on the 4^{th} initial to-be-queried subtext by using the search service may be, for example, "The gunpowder, as the name implies, may be a spark, a flame, or the like, ...", and the 4^{th} initial to-be-queried subtext and the second subquery result corresponding to the 4^{th} initial to-be-queried subtext are combined to obtain a 4^{th} to-be-queried subtext, namely, a 4^{th} subquery. A 5^{th} initial to-be-queried subtext (namely, a 5^{th} initial subquery) is "Introduce the compass", a second subquery result obtained by performing second query processing on the 5^{th} initial to-be-queried subtext by using the search service may be, for example, "The compass, referred to as Sinan in ancient times, has main components of...", and the 5^{th} initial to-be-queried subtext and the second subquery result corresponding to the 5^{th} initial to-be-queried subtext are combined to obtain a 5^{th} to-be-queried subtext, namely, a 5^{th} subquery.

Based on the foregoing solution, for each initial to-be-queried subtext, the initial to-be-queried subtext and the second subquery result corresponding to the initial to-be-queried subtext are combined to obtain the to-be-queried subtext. This improves integrity of the determined to-be-queried subtext, and further improves accuracy and integrity of the first subquery result subsequently determined based on the to-be-queried subtext.

In addition, the plurality of to-be-queried subtexts not only have a meaning of the to-be-queried text, but also have related information of the to-be-queried text and the foregoing second subquery result. For example, when the plurality of to-be-queried subtexts are processed by using the text generation model, the second subquery result may be supplemented to obtain the first subquery result. This shortens time for generating the plurality of first subquery results by the text generation model, and improves efficiency and accuracy of generating the plurality of first subquery results by the text generation model. The second subquery result may be a reply text corresponding to the initial to-be-queried subtext.

S708: Perform first query processing on the plurality of to-be-queried subtexts in parallel by using a generative pre-trained transformer GPT to obtain a first subquery result corresponding to each to-be-queried subtext.

The text generation model includes the GPT.

In this embodiment of this application, the plurality of to-be-queried subtexts may be simultaneously input into the GPT, or the plurality of to-be-queried subtexts may be sequentially input into the GPT. The GPT may perform first query processing on the plurality of to-be-queried subtexts in parallel, to obtain the first subquery result corresponding to each to-be-queried subtext. That the GPT performs first query processing on the plurality of to-be-queried subtexts in parallel may be simultaneously starting to perform first query processing on the plurality of to-be-queried subtexts. Certainly, that the GPT performs first query processing on the plurality of to-be-queried subtexts in parallel may alternatively be sequentially starting to process the plurality of to-be-queried subtexts. For example, the GPT may start to perform first query processing on an (N+1)^{th} to-be-queried subtext in a process of performing first query processing on an N^{th} to-be-queried subtext. When the GPT performs first query processing on a last to-be-queried subtext in the plurality of to-be-queried subtexts, first query processing performed by the GPT on one to-be-queried subtext has not ended.

For example, a quantity of the plurality of to-be-queried subtexts may be three, a 1^{st} to-be-queried subtext is "What is the size of the screen of the mobile phone A", a 2^{nd} to-be-queried subtext is "What is the size of the screen of the mobile phone B", and a 3^{rd} to-be-queried subtext may be "Which one is larger between the screens of the mobile phone A and the mobile phone B". The three to-be-queried subtexts may be simultaneously input into the GPT. An obtained first subquery result corresponding to the 1^{st} to-be-queried subtext may be, for example, "The size of the screen of the mobile phone A is...", an obtained first subquery result corresponding to the 2^{nd} to-be-queried subtext may be, for example, "The size of the screen of the mobile phone B is...", and an obtained first subquery result corresponding to the 3^{rd} to-be-queried subtext may be, for example, "The size of the screen of the mobile phone A is smaller than the size of the screen of the mobile phone B".

In the foregoing solution, the GPT is used to perform first query processing on the plurality of to-be-queried subtexts in parallel, to obtain the first subquery result corresponding to each to-be-queried subtext. This shortens time for performing first query processing on the plurality of to-be-queried subtexts by the GPT, thereby shortening time for generating the plurality of first subquery results by the GPT, and improving efficiency of generating the plurality of first subquery results (namely, the reply texts) by the GPT.

S709: Determine, based on the query operation information, whether there is a dependency relationship between the plurality of to-be-queried subtexts.

In this embodiment of this application, semantic analysis may be performed on the query operation information to determine whether there is a dependency relationship between the plurality of to-be-queried subtexts. Certainly, whether there is a dependency relationship between the to-be-queried subtexts may alternatively be determined based on the target character or a format of arrangement between steps in the query operation information. The target character may be a space.

For example, whether there is a dependency relationship between the to-be-queried subtexts may be determined based on the format of arrangement between steps in the query operation information. For the query operation information shown in FIG. 5B, after the query operation information is analyzed, it can be learned that initial characters between two steps in the query operation information are aligned. In this case, it may be determined that there is no dependency relationship between the two steps in the query operation information, in other words, there is no dependency relationship between the to-be-queried subtexts. For the query operation information shown in FIG. 6B, after the query operation information is analyzed, it can be learned that an initial character of the first step is not aligned with initial characters of the other four steps. In this case, it may be determined that there is a dependency relationship between the to-be-queried subtexts, and any one of steps 2 to 4 depends on step 1. For the query operation information shown in FIG. 7B, after the query operation information is analyzed, it can be learned that initial characters of the first step and the second step are aligned, but an initial character of the third step is not aligned with the initial characters of the first two steps. In this case, it is determined that there is a dependency relationship between the three to-be-queried subtexts, and the third step depends on the first two steps.

S710: Perform, when there is no dependency relationship between the plurality of to-be-queried subtexts, first query processing on the plurality of to-be-queried subtexts in parallel by using the GPT to obtain the first subquery result corresponding to each to-be-queried subtext.

The text generation model includes the GPT.

For example, the 1^{st} to-be-queried subtext is "1. What to do if you snore while sleeping", the 2^{nd} to-be-queried subtext is "2. Treatment methods for snoring while sleeping", and there is no dependency relationship between the 1^{st} to-be-queried subtext and the 2^{nd} to-be-queried subtext.

It should be noted that, when there is no dependency relationship between the plurality of to-be-queried subtexts, a process in which first query processing is performed on the plurality of to-be-queried subtexts in parallel by using the GPT to obtain the first subquery result corresponding to each to-be-queried subtext in S710 is the same as a process in which first query processing is performed on the plurality of to-be-queried subtexts in parallel by using the GPT to obtain the first subquery result corresponding to each to-be-queried subtext in S708. For details, refer to the process in which first query processing is performed on the plurality of to-be-queried subtexts in parallel by using the GPT to obtain the first subquery result corresponding to each to-be-queried subtext in S708. Details are not described herein again in this embodiment of this application.

S711: Perform, when there is a dependency relationship between the plurality of to-be-queried subtexts, first query processing on the plurality of to-be-queried subtexts by using the GPT to obtain the first subquery result corresponding to each to-be-queried subtext.

First query processing on at least two of the plurality of to-be-queried subtexts is performed in parallel, a quantity of the at least two to-be-queried subtexts is less than the quantity of the plurality of to-be-queried subtexts, and the text generation model includes the GPT.

In this embodiment of this application, when there is a dependency relationship between the plurality of to-be-queried subtexts, at least two to-be-queried subtexts on which first query processing needs to be performed in parallel may be determined from the to-be-queried subtexts, and a quantity of the at least two to-be-queried subtexts is less than the quantity of the plurality of to-be-queried subtexts. At least two to-be-queried subtexts may be randomly selected from the plurality of to-be-queried texts; or at least two to-be-queried subtexts may be determined from the plurality of to-be-queried subtexts based on a dependency relationship and/or importance degrees of the to-be-queried subtexts. After the at least two to-be-queried subtexts are obtained, the at least two to-be-queried subtexts may be input into the GPT based on the dependency relationship. If an (N+1)^{th} to-be-queried subtext depends on an N^{th} to-be-queried subtext, the N^{th} to-be-queried subtext may be first input into the GPT, and then the (N+1)^{th} to-be-queried subtext is input into the GPT.

In a possible implementation, when there is the dependency relationship between the plurality of to-be-queried subtexts, the at least two to-be-queried subtexts on which first query processing needs to be performed in parallel may be determined from the to-be-queried subtexts in the following manner:
when there is the dependency relationship between the plurality of to-be-queried subtexts, determining the at least two to-be-queried subtexts from the plurality of to-be-queried subtexts based on the dependency relationship.

In this embodiment of this application, a query operation rank of each of the plurality of to-be-queried subtexts may be determined based on the dependency relationship, and the at least two to-be-queried subtexts are determined from the plurality of to-be-queried subtexts based on the query operation rank. The query operation rank represents a query sequence of each to-be-queried subtext when the plurality of to-be-queried subtexts are queried.

Specifically, when there are same query operation ranks in query operation ranks corresponding to the plurality of to-be-queried subtexts, to-be-queried subtexts corresponding to the same query operation ranks may be used as to-be-queried subtexts on which first query processing needs to be performed in parallel. When there are no same query operation ranks in the query operation ranks corresponding to the plurality of to-be-queried subtexts, at least two to-be-queried subtexts that need to be processed in parallel may be randomly selected. Certainly, when there are no same query operation ranks in the query operation ranks corresponding to the plurality of to-be-queried subtexts, at least two to-be-queried subtexts whose importance degrees satisfy an importance degree condition may be further determined from the plurality of to-be-queried subtexts based on the importance degrees of the to-be-queried subtexts, and the at least two to-be-queried subtexts are used as to-be-queried subtexts on which first query processing needs to be performed in parallel.

For example, a 1^{st} to-be-queried subtext is "What is the size of the screen of the mobile phone A", a 2^{nd} to-be-queried subtext is "What is the size of the screen of the mobile phone B", and a 3^{rd} to-be-queried subtext may be "Which one is larger between the screens of the mobile phone A and the mobile phone B". A dependency relationship represents that the 3^{rd} to-be-queried subtext depends on the 1^{st} to-be-queried subtext and the 2^{nd} to-be-queried subtext. In this case, it may be determined that query operation ranks of the 1^{st} to-be-queried subtext and the 2^{nd} to-be-queried subtext are both "1", and a query operation rank of the 3^{rd} to-be-queried subtext is 2. The 1^{st} to-be-queried subtext and the 2^{nd} to-be-queried subtext whose query operation ranks are both 1 may be used as to-be-queried subtexts that need to be processed in parallel. The 1^{st} to-be-queried subtext and the 2^{nd} to-be-queried subtext may be simultaneously input into the GPT. After the GPT outputs a first subquery result corresponding to the 1^{st} to-be-queried subtext and a first subquery result corresponding to the 2^{nd} to-be-queried subtext, the 3^{rd} to-be-queried subtext is input into the GPT. This ensures coherence and readability of the plurality of first subquery results output by the GPT. The electronic device may output the plurality of first subquery results in a sequence in which the GPT outputs the first subquery results, to ensure readability of the plurality of output first subquery results, and improve user experience.

S712: Output the plurality of first subquery results.

At least two of the plurality of first subquery results are output in parallel. The at least two first subquery results may be simultaneously output, or may not be simultaneously output.

In this embodiment of this application, when there is no dependency relationship between the plurality of to-be-queried subtexts, the plurality of first subquery results may be output based on the sequence in which the GPT outputs the plurality of first subquery results.

Specifically, when there is no dependency relationship between the plurality of to-be-queried subtexts, the electronic device may output the plurality of first subquery results in a streaming output manner or a non-streaming output manner based on the sequence in which the GPT outputs the plurality of first subquery results.

When there is no dependency relationship between the plurality of to-be-queried subtexts, and the streaming output manner is used, for example, if the GPT first outputs the first word in a 1^{st} first subquery result at a time point t1, the first word in the 1^{st} first subquery result is immediately output, and then other words in the 1^{st} first subquery result sequentially output by the GPT are output. In a process of outputting the 1^{st} first subquery result, if the GPT outputs the first word in a 2^{nd} first subquery result, the first word in the 2^{nd} first subquery result is immediately output, and then other words in the 2^{nd} first subquery result sequentially output by the GPT are output. When the electronic device outputs the plurality of first subquery results, a sorting sequence of the plurality of first subquery results is the same as an output sequence of outputting the plurality of first subquery results by the GPT. The 1^{st} first subquery result and the 2^{nd} first subquery result are output in parallel, but a start time point at which the 1^{st} first subquery result is output is different from a start time point at which the 2^{nd} first subquery result is output. The start time point at which the 1^{st} first subquery result is output is earlier than the start time point at which the 2^{nd} first subquery result is output.

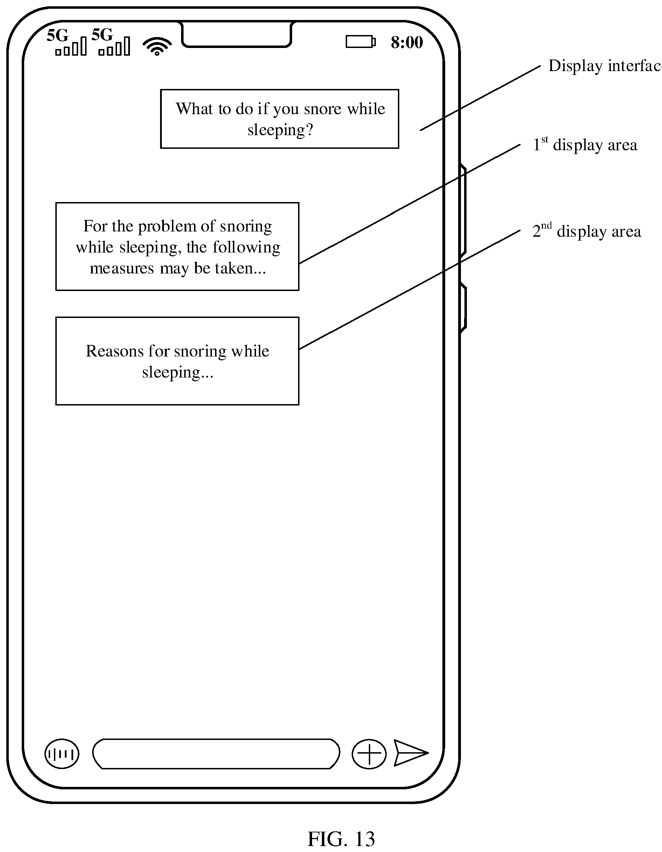

For example, the electronic device is a terminal, there are two to-be-queried subtexts, the 1^{st} to-be-queried subtext is "1. What to do if you snore while sleeping", the 2^{nd} to-be-queried subtext is "2. Treatment methods for snoring while sleeping", and there is no dependency relationship between the 1^{st} to-be-queried subtext and the 2^{nd} to-be-queried subtext. Two first subquery results may be output in a streaming output manner. For example, a 1^{st} first subquery result corresponding to the 1^{st} to-be-queried subtext may be "Reasons for snoring while sleeping are mainly as follows...", and a 2^{nd} first subquery result corresponding to the 2^{nd} to-be-queried subtext may be "For the problem of snoring while sleeping, the following measures may be taken...". As shown in FIG. 13, for example, if the GPT first outputs the first word "For" in the 2^{nd} first subquery result, "For" is immediately output to a display area (namely, a 1^{st} display area) in a display interface of a display of the terminal, and then other words in the 2^{nd} first subquery result output by the GPT are sequentially output to the 1^{st} display area. In a process in which the GPT outputs the 2^{nd} first subquery result, if the GPT outputs the first word "Reasons" in the 1^{st} first subquery result, "Reasons" is also immediately output to another display area in the display interface, namely, a 2^{nd} display area, and then other words in the 1^{st} first subquery result output by the GPT are output to the 2^{nd} display area. In this way, for the to-be-queried text, in the display interface, the user may view that a plurality of paragraphs of words are synchronously generated, and finally may view a plurality of output complete first subquery results (namely, the reply texts, where each paragraph corresponds to one first subquery result).

When there is no dependency relationship between the plurality of to-be-queried subtexts, and the non-streaming output manner is used, for example, if the GPT first outputs the first word in the 1^{st} first subquery result at the time point t1, the electronic device does not output the word, but needs to wait until the GPT completely outputs the plurality of first subquery results, and then outputs the plurality of complete first subquery results. When the electronic device outputs the plurality of first subquery results, a sorting sequence of the plurality of first subquery results is the same as an output sequence of outputting the plurality of first subquery results by the GPT. The plurality of first subquery results may be simultaneously output. In other words, start time points at which the plurality of first subquery results are output are the same.

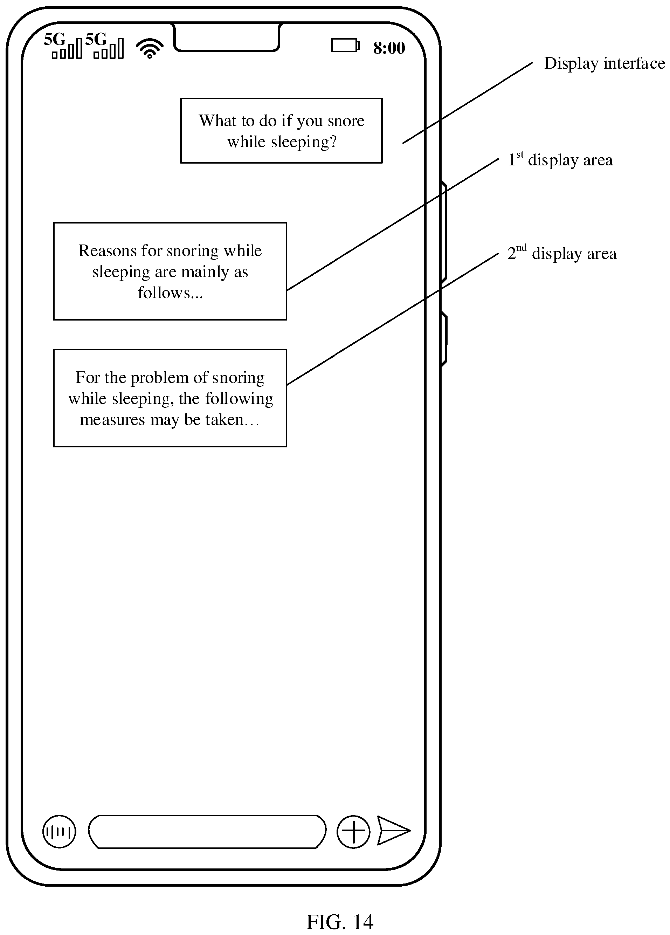

For example, the electronic device is the terminal, the 1^{st} first subquery result corresponding to the 1^{st} to-be-queried subtext may be "Reasons for snoring while sleeping are mainly as follows...", and the 2^{nd} first subquery result corresponding to the 2^{nd} to-be-queried subtext may be "For the problem of snoring while sleeping, the following measures may be taken...". For example, if the GPT first outputs the first word "Reasons" in the 1^{st} first subquery result, "Reasons" is not output. Instead, after the GPT outputs the complete 1^{st} first subquery result and the complete 2^{nd} first subquery result, the complete 1^{st} first subquery result and 2^{nd} first subquery result are output to the display interface of the display of the terminal. As shown in FIG. 14, the complete 1^{st} first subquery result may be displayed in a 1^{st} display area in the display interface, and the complete 2^{nd} first subquery result may be displayed in a 2^{nd} display area in the display interface. Because the GPT first outputs the 1^{st} first subquery result, and then the GPT outputs the 2^{nd} first subquery result in a process of outputting the first subquery results, the output 1^{st} first subquery result is arranged before the 2^{nd} first subquery result in the display interface. As shown in FIG. 14, the 1^{st} first subquery result and the 2^{nd} first subquery result may be simultaneously displayed. In the display interface, the user may view that a plurality of paragraphs of words are generated synchronously and simultaneously, and finally may view a plurality of output complete first subquery results. The 2^{nd} first subquery result may be displayed without waiting for complete displaying of the 1^{st} first subquery result. This shortens waiting time of the user, and improves user experience.

It should be noted that, when there is no dependency relationship between the plurality of to-be-queried subtexts, and the electronic device is a server, the server may send the plurality of first subquery results to a terminal in a streaming output manner or a non-streaming output manner, and the terminal may display the plurality of first subquery results in a display interface of a display. For example, the terminal may display the plurality of first subquery results in the display interface of the display in the display manner shown in FIG. 13 or FIG. 14.

In this embodiment of this application, when there is the dependency relationship between the plurality of to-be-queried subtexts, the plurality of first subquery results may be output based on the dependency relationship in the streaming output manner or the non-streaming output manner. At least two of the plurality of first subquery results are output in parallel.

When there is the dependency relationship between the plurality of to-be-queried subtexts, and the streaming output manner is used, for example, if the GPT first outputs the first word in a 1^{st} first subquery result at a time point t1, the first word in the 1^{st} first subquery result is immediately output, and then other words in the 1^{st} first subquery result sequentially output by the GPT are output. In a process of outputting the 1^{st} first subquery result, if the GPT outputs the first word in a 2^{nd} first subquery result, the first word in the 2^{nd} first subquery result is immediately output, and then other words in the 2^{nd} first subquery result sequentially output by the GPT are output. The 2^{nd} to-be-queried subtext corresponding to the 2^{nd} first subquery result depends on the 1^{st} to-be-queried subtext corresponding to the 1^{st} first subquery result. When the electronic device outputs the plurality of first subquery results, a sorting sequence of the plurality of first subquery results is related to the query operation ranks of the plurality of to-be-queried subtexts. The 1^{st} first subquery result and the 2^{nd} first subquery result are output in parallel, but a start time point at which the 1^{st} first subquery result is output is different from a start time point at which the 2^{nd} first subquery result is output. The start time point at which the 1^{st} first subquery result is output is earlier than the start time point at which the 2^{nd} first subquery result is output.

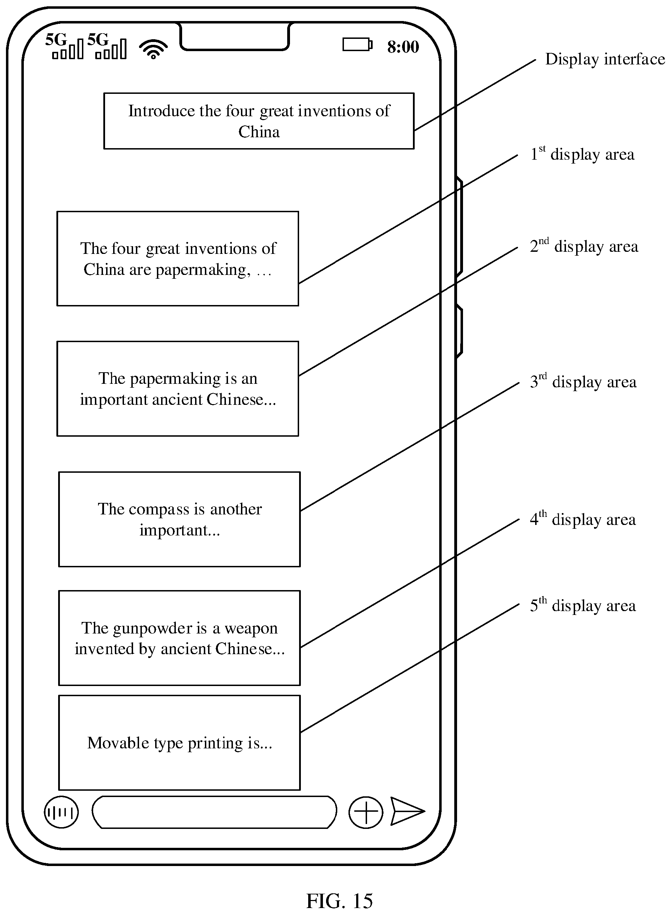

For example, the electronic device is a terminal, and there is a dependency relationship between the plurality of to-be-queried subtexts. For example, the quantity of the plurality of to-be-queried subtexts may be five, a 1^{st} to-be-queried subtext is "1. List the four great inventions of China", a 2^{nd} to-be-queried subtext is "2. Introduce the papermaking", a 3^{rd} to-be-queried subtext is "3. Introduce the printing", a 4^{th} to-be-queried subtext is "4. Introduce the gunpowder", and a 5^{th} to-be-queried subtext is "Introduce the compass". The dependency relationship represents that the 2^{nd} to 5^{th} to-be-queried subtexts depend on the 1^{st} to-be-queried subtext, and five first subquery results may be output in a streaming output manner. As shown in FIG. 15, for example, if the GPT first outputs the first word "The" in a 1^{st} first subquery result corresponding to the 1^{st} to-be-queried subtext, "The" is immediately output to a display area (namely, a 1^{st} display area) in a display interface of a display of the terminal, and then other words in the 1^{st} first subquery result output by the GPT are sequentially output to the 1^{st} display area. Then, when the GPT outputs another first subquery result, each word in the another first subquery result output by the GPT is also immediately output to another display area in the display interface for display. Because the 2^{nd} to 5^{th} to-be-queried subtexts depend on the 1^{st} to-be-queried subtext, the 1^{st} first subquery result is arranged before first subquery results corresponding to the 2^{nd} to 5^{th} to-be-queried subtexts. As shown in FIG. 15, in the display interface, the user may view that a plurality of paragraphs of words (for example, each display area may correspond to one paragraph of words) are synchronously generated, and the plurality of paragraphs of words do not affect each other during generation. Finally, the plurality of output complete first subquery results may be viewed. Start time points at which the plurality of paragraphs of words are generated may be different.

When there is a dependency relationship between the plurality of to-be-queried subtexts, and the non-streaming output manner is used, for example, if the GPT first outputs the first word in the 1^{st} first subquery result at the time point t1, the electronic device does not output the word, but needs to wait until the GPT completely outputs the plurality of first subquery results, and then outputs the plurality of complete first subquery results based on the dependency relationship. The plurality of first subquery results may be simultaneously output by the electronic device, and start time points at which the plurality of first subquery results are output are the same.

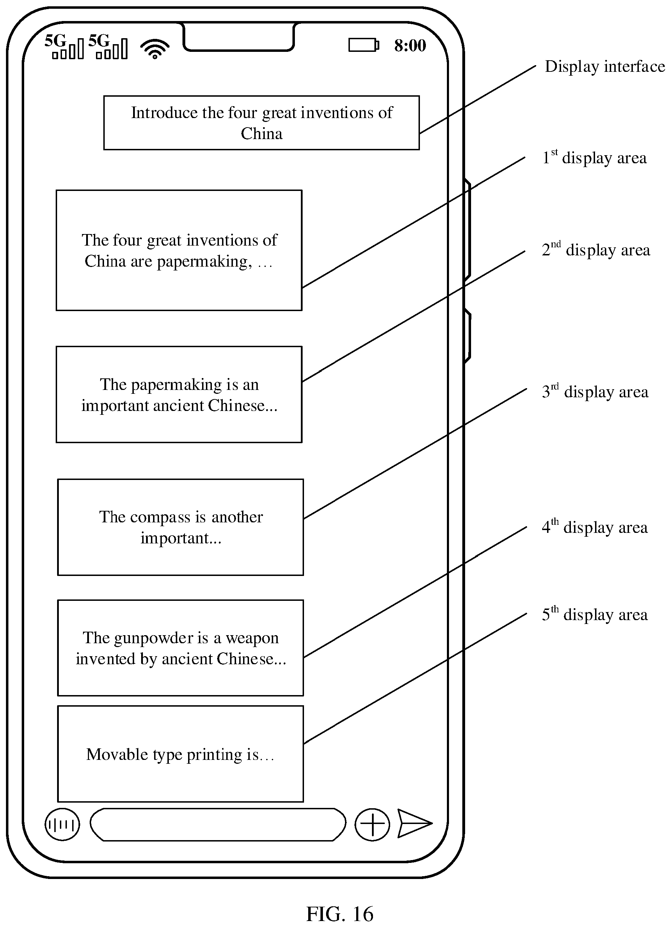

For example, the electronic device is the terminal. The 1^{st} first subquery result corresponding to the 1^{st} to-be-queried subtext may be "The four great inventions of China are papermaking, compass, gunpowder, and...". The 2^{nd} first subquery result corresponding to the 2^{nd} to-be-queried subtext may be "The papermaking is an important ancient Chinese invention, which makes writing...". The 3^{rd} first subquery result corresponding to the 3^{rd} to-be-queried subtext may be "The compass is another important ancient Chinese invention, which makes...". The 4^{th} first subquery result corresponding to the 4^{th} to-be-queried subtext may be "The gunpowder is a weapon invented by ancient Chinese alchemists for military purposes, and also...". The 5^{th} first subquery result corresponding to the 5^{th} to-be-queried subtext may be "Movable type printing is a technology used for printing, ...". For example, if the GPT first outputs the first word "The" in the 1^{st} first subquery result, "The" is not output. Instead, after the GPT outputs the five complete first subquery results, the five complete first subquery results are output to the display interface of the display of the terminal. As shown in FIG. 16, the 1^{st} first subquery result may be displayed in a 1^{st} display area in the display interface, the 2^{nd} first subquery result may be displayed in a 2^{nd} display area in the display interface, ..., and the 5^{th} first subquery result may be displayed in a 5^{th} display area. Because the 2^{nd} to 5^{th} to-be-queried subtexts depend on the 1^{st} to-be-queried subtext, the 1^{st} first subquery result displayed in the display interface is arranged before the 2^{nd} to 5^{th} first subquery results. As shown in FIG. 16, the five first subquery results may be simultaneously displayed. In the display interface, the user may view that a plurality of paragraphs of words are generated synchronously and simultaneously (each first subquery result corresponds to one paragraph), and finally may view a plurality of output complete first subquery results.

It should be noted that, when there is a dependency relationship between the plurality of to-be-queried subtexts, and the electronic device is a server, the server may send the plurality of first subquery results to a terminal based on the dependency relationship in a streaming output manner or a non-streaming output manner, and the terminal may display the plurality of first subquery results in a display interface of a display. For example, the terminal may display the plurality of first subquery results in the display interface of the display in the display manner shown in FIG. 15 or FIG. 16.

In the foregoing solution, when there is the dependency relationship between the plurality of to-be-queried subtexts, the dependency relationship between the plurality of to-be-queried subtexts is considered, and the plurality of first subquery results are output. This ensures readability of the plurality of first sub-output results presented to the user, and avoids a case that readability of the plurality of first sub-output results is poor and user experience is reduced because there is the dependency relationship between the plurality of to-be-queried subtexts, but paragraphs of the plurality of first subquery results presented to the user are disordered.

It should be noted that, for descriptions of same steps and same content in this embodiment of this application as those in another embodiment, refer to descriptions in the another embodiment. Details are not described herein again.

According to the text processing method provided in this embodiment of this application, query operation information is generated based on a to-be-queried text, a plurality of to-be-queried subtexts are determined, and when first query processing is then performed on the plurality of to-be-queried subtexts by using a text generation model, first query processing is performed on at least two of the plurality of to-be-queried subtexts in parallel. This shortens time for performing first query processing on the plurality of to-be-queried subtexts by the text generation model, thereby shortening time for generating a plurality of first subquery results, and improving efficiency of generating the plurality of first subquery results. The related technology in which the to-be-queried text is directly processed by using the text generation model is not required. This resolves a problem in the related technology that time for generating a reply text by using the text generation model is long and efficiency is low.

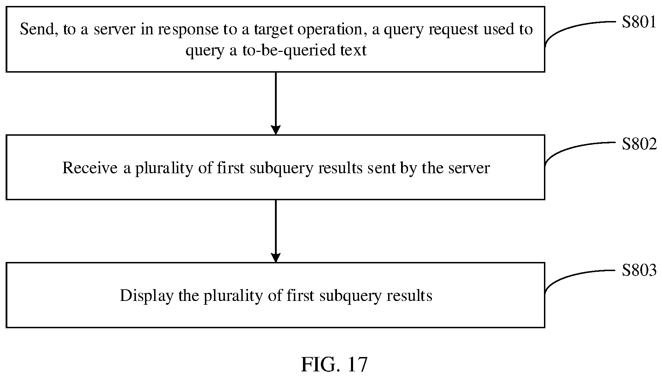

An embodiment of this application provides a text processing method, applied to an electronic device. For example, the electronic device may be a terminal. The following describes in detail the text processing method provided in this embodiment of this application by using an example in which the electronic device is a terminal. As shown in FIG. 17, the text generation method may be implemented by using S801 to S803. The steps are described below.

S801: Send, to a server in response to a target operation, a query request used to query a to-be-queried text.

The target operation may be an input operation, and the input operation includes at least one of a text input, a voice input, a gesture input, or the like.

In this embodiment of this application, the to-be-queried text may be obtained in response to the target operation, the query request that carries the to-be-queried text is generated, and the query request is sent to the server.

Obtaining the to-be-queried text in response to the target operation may be implemented in the following manner:

In a feasible implementation, to-be-queried information may be obtained in response to the target operation. A format of the to-be-queried information includes but is not limited to at least one of formats such as a text format, an image format, or an audio format. When the format of the to-be-queried information is a text format, the to-be-queried information is used as the to-be-queried text; or when the format of the to-be-queried information is a non-text format, format conversion is performed on the to-be-queried information to obtain the to-be-queried text.

For example, a user may enter, in a display interface of a terminal shown in FIG. 11, content that needs to be queried. The terminal obtains the to-be-queried text in response to an input operation of the user, generates the query request that carries the to-be-queried text, and sends the query request to the server. The to-be-queried text may be, for example, "Introduce the four great inventions of China".

S802: Receive a plurality of first subquery results sent by the server.

The plurality of first subquery results are obtained by the server by generating, in response to the query request, query operation information based on the to-be-queried text, and performing, by using a text generation model, first query processing on a plurality of to-be-queried subtexts determined based on the query operation information, the query operation information represents a query plan for querying the to-be-queried text, and first query processing on at least two of the plurality of to-be-queried subtexts is performed in parallel.

In this embodiment of this application, after receiving the query request, the server may generate, in response to the query request, the query operation information based on the to-be-queried text, determine the plurality of to-be-queried subtexts based on the query operation information, perform first query processing on the plurality of to-be-queried subtexts by using the text generation model to obtain a first subquery result corresponding to each to-be-queried subtext, and output the plurality of first subquery results, where first query processing on the at least two of the plurality of to-be-queried subtexts is performed in parallel.

It should be noted that, for details about the server "generates the query operation information based on the to-be-queried text, determines the plurality of to-be-queried subtexts based on the query operation information, and performs first query processing on the plurality of to-be-queried subtexts by using the text generation model to obtain the first subquery result corresponding to each to-be-queried subtext", refer to S704 to S711 or S302 to S304 in the foregoing embodiment. Details are not described herein again in this embodiment of this application.

In this embodiment of this application, regardless of whether there is a dependency relationship between the plurality of to-be-queried subtexts, the server may send the plurality of first subquery results to the terminal in a streaming output manner or a non-streaming output manner. When there is a dependency relationship between the plurality of to-be-queried subtexts, the server sends the plurality of first subquery results to the terminal based on the dependency relationship in a streaming output manner or a non-streaming output manner. At least two of the plurality of first subquery results are sent by the server to the terminal in parallel.

The at least two first subquery results sent by the server in parallel may be first subquery results corresponding to to-be-queried subtexts on which first query processing is performed in parallel.

It should be noted that, that the server sends the at least two first subquery results in parallel may be that the server simultaneously sends the at least two first subquery results, or may be that the server does not simultaneously send the at least two first subquery results. That the server does not simultaneously send the at least two first subquery results may be, for example, the server sends an (N+1)^{th} first subquery result in a process of sending an N^{th} first subquery result, in other words, a start time point at which the N^{th} first subquery result is sent is different from a start time point at which the (N+1)^{th} first subquery result is sent. N is a positive integer.

S803: Display the plurality of first subquery results.

In this embodiment of this application, the terminal may receive the plurality of first subquery results sent by the server, and output the plurality of first subquery results to a display for display. The display may be a display of the terminal, or may be a display externally connected to the terminal. At least two of the plurality of first subquery results are displayed in parallel.

That the terminal displays at least two of the plurality of first subquery results in parallel may be: The terminal simultaneously displays the at least two first subquery results, where start time points at which the at least two first subquery results are displayed are the same. In this way, it can be viewed in the display interface of the terminal that a plurality of paragraphs of texts simultaneously start to be displayed word by word (each paragraph of texts corresponds to one first subquery result).

Certainly, that the terminal displays at least two of the plurality of first subquery results in parallel may alternatively be: The terminal displays the (N+1)^{th} first subquery result in a process of displaying the N^{th} first subquery result; the at least two first subquery results include the N^{th} first subquery result and the (N+1)^{th} first subquery result; and a start time point at which the N^{th} first subquery result is displayed is different from a start time point at which the (N+1)^{th} first subquery result is displayed. In this way, it can be viewed in the display interface of the terminal that a paragraph of texts is displayed word by word first. Before the paragraph of texts is completely displayed, another paragraph of texts also starts to be displayed word by word and presented to the user. The user may view that a plurality of paragraphs of texts are generated synchronously.

Based on the foregoing solution, when the server performs first query processing on the plurality of to-be-queried subtexts by using the text generation model, first query processing on at least two of the plurality of to-be-queried subtexts is performed in parallel. This shortens time for generating the plurality of first subquery results. The plurality of first subquery results are sent to the terminal, and the at least two first subquery results are displayed in parallel in the display interface of the terminal. This shortens time for the user to wait to view the plurality of first subquery results, and improves user experience.

It should be noted that, for descriptions of same steps and same content in this embodiment of this application as those in another embodiment, refer to descriptions in the another embodiment. Details are not described herein again.

According to the text processing method provided in this embodiment of this application, a query request used to query a to-be-queried text is sent to a server in response to a target operation; a plurality of first subquery results sent by the server are received, where the plurality of first subquery results are obtained by the server by generating, in response to the query request, query operation information based on the to-be-queried text, and performing, by using a text generation model, first query processing on a plurality of to-be-queried subtexts determined based on the query operation information, the query operation information represents a query plan for querying the to-be-queried text, and first query processing on at least two of the plurality of to-be-queried subtexts is performed in parallel; and the plurality of first subquery results are displayed. In this way, when performing first query processing on the plurality of to-be-queried subtexts by using the text generation model, the server performs first query processing on at least two of the plurality of to-be-queried subtexts in parallel. This shortens time for performing first query processing on the plurality of to-be-queried subtexts by the text generation model, thereby shortening time for generating the plurality of first subquery results, and improving efficiency of generating the plurality of first subquery results. The related technology in which the to-be-queried text is directly processed by using the text generation model is not required. This resolves a problem in the related technology that time for generating a reply text by using the text generation model is long and efficiency is low.

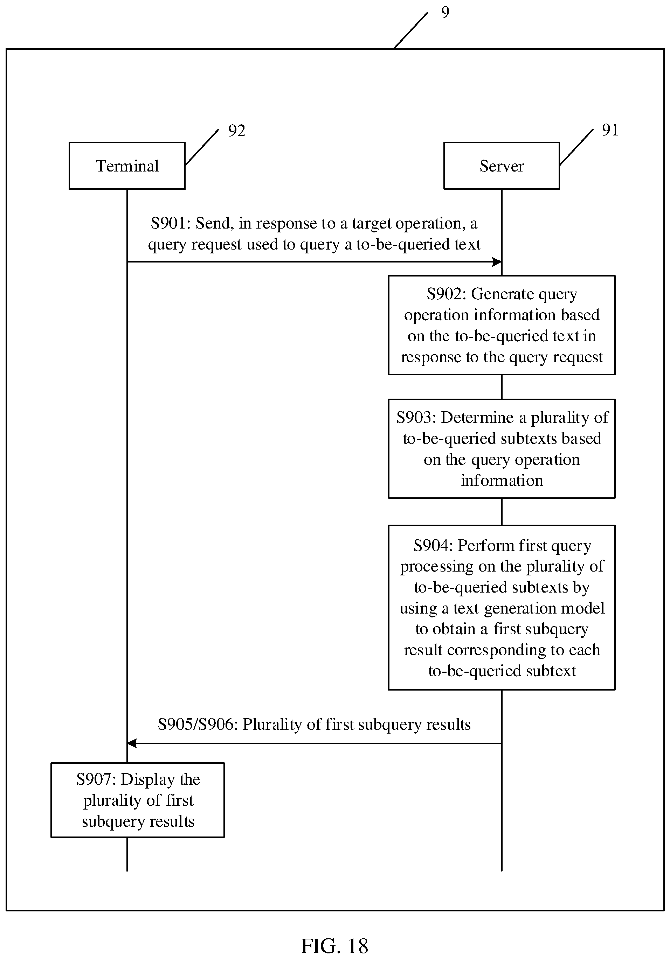

Based on the foregoing embodiments, an embodiment of this application provides a text processing system. The text processing method provided above may be applied to the system 9. As shown in FIG. 18, the system 9 includes a server 91 and a terminal 92, the terminal 92 is connected to the server 91, and the terminal 92 and the server 91 are configured to perform the following steps:

S901: The terminal 92 sends, to the server in response to a target operation, a query request used to query a to-be-queried text.

It should be noted that an implementation process of S901 is the same as an implementation process of S801 in the foregoing embodiment. For details, refer to the implementation process of S801 in the foregoing embodiment. Details are not described herein again in this embodiment of this application.

S902: The server 91 generates query operation information based on the to-be-queried text in response to the query request. The query operation information represents a query plan for querying the to-be-queried text.

S903: The server 91 determines a plurality of to-be-queried subtexts based on the query operation information.

S904: The server 91 performs first query processing on the plurality of to-be-queried subtexts by using a text generation model to obtain a first subquery result corresponding to each to-be-queried subtext.

First query processing on at least two of the plurality of to-be-queried subtexts is performed in parallel.

It should be noted that, for details of S902 and S904, refer to S704 to S711 or S302 to S304 in the foregoing embodiment. Details are not described herein again in this embodiment of this application.

S905: The server 91 sends a plurality of first subquery results to the terminal.

S906: The terminal 92 receives the plurality of first subquery results sent by the server.

S907: The terminal 92 displays the plurality of first subquery results.

It should be noted that an implementation process of S907 is the same as an implementation process of S803 in the foregoing embodiment. For a specific implementation process of S907, refer to the specific implementation process of S803. Details are not described herein again in this embodiment of this application.

According to the text processing system provided in this embodiment of this application, when first query processing is performed on a plurality of to-be-queried subtexts by using a text generation model, first query processing is performed on at least two of the plurality of to-be-queried subtexts in parallel. This shortens time for performing first query processing on the plurality of to-be-queried subtexts by the text generation model, thereby shortening time for generating a plurality of first subquery results, and improving efficiency of generating the plurality of first subquery results. The related technology in which a to-be-queried text is directly processed by using the text generation model is not required. This resolves a problem in the related technology that time for generating a reply text by using the text generation model is long and efficiency is low.

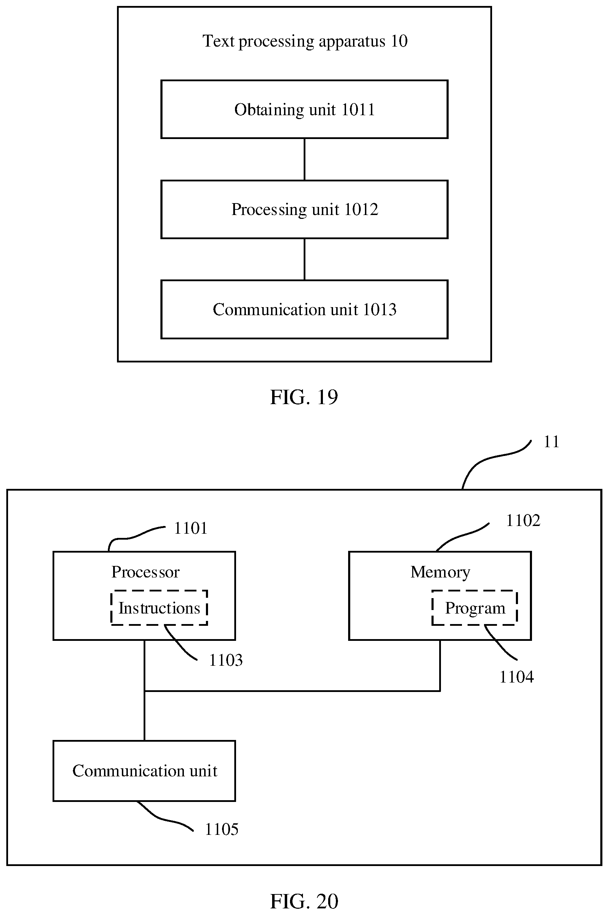

The following describes in detail an embodiment of a text processing apparatus in this application with reference to FIG. 19. It should be understood that the text processing apparatus in this embodiment of this application may perform the text processing methods in the foregoing embodiments. In other words, for specific working processes of the following products, refer to corresponding processes in the foregoing method embodiments.

FIG. 19 is a diagram of a structure of a text processing apparatus 10 according to an embodiment of this application. The text processing apparatus 10 includes an obtaining unit 1011, a processing unit 1012, and a communication unit 1013.

In a possible design, the text processing apparatus 10 may be configured to perform the steps or procedures of the text processing methods in FIG. 4 and FIG. 9A to FIG. 9C. The obtaining unit 1011 is configured to obtain a to-be-queried text. The processing unit 1012 is configured to generate query operation information based on the to-be-queried text, where the query operation information represents a query plan for querying the to-be-queried text. The processing unit 1012 is further configured to determine a plurality of to-be-queried subtexts based on the query operation information. The processing unit 1012 is further configured to perform first query processing on the plurality of to-be-queried subtexts by using a text generation model to obtain a first subquery result corresponding to each to-be-queried subtext, where first query processing on at least two of the plurality of to-be-queried subtexts is performed in parallel. The communication unit 1013 is configured to output a plurality of first subquery results.

Optionally, the processing unit 1012 is specifically configured to process the to-be-queried text by using an operation information generation model, to obtain query operation information.

Optionally, the processing unit 1012 is specifically configured to: obtain a to-be-queried sample text and sample query operation information corresponding to the to-be-queried sample text, where the sample query operation information represents a query plan for querying the to-be-queried sample text; and train an initial operation information generation model based on the to-be-queried sample text and the sample query operation information, to obtain the operation information generation model.

Optionally, the processing unit 1012 is specifically configured to: determine a plurality of initial to-be-queried subtexts from the query operation information; and use the plurality of initial to-be-queried subtexts as the plurality of to-be-queried subtexts; or perform, for each initial to-be-queried subtext, second query processing on the initial to-be-queried subtext by using a search service to obtain a second subquery result, and combine the second subquery result and the initial to-be-queried subtext to obtain the to-be-queried subtext.

Optionally, the processing unit 1012 is specifically configured to perform first query processing on the plurality of to-be-queried subtexts in parallel by using a generative pre-trained transformer GPT to obtain the first subquery result corresponding to each to-be-queried subtext, where the text generation model includes the GPT.

Optionally, the processing unit 1012 is specifically configured to perform, when there is no dependency relationship between the plurality of to-be-queried subtexts, first query processing on the plurality of to-be-queried subtexts in parallel by using the GPT to obtain the first subquery result corresponding to each to-be-queried subtext, where the text generation model includes the GPT.

Optionally, the processing unit 1012 is specifically configured to perform, when there is a dependency relationship between the plurality of to-be-queried subtexts, first query processing on the plurality of to-be-queried subtexts by using the GPT to obtain the first subquery result corresponding to each to-be-queried subtext, where first query processing on at least two of the plurality of to-be-queried subtexts is performed in parallel, a quantity of the at least two to-be-queried subtexts is less than a quantity of the plurality of to-be-queried subtexts, and the text generation model includes the GPT.

Optionally, the processing unit 1012 is further configured to determine, when there is the dependency relationship between the plurality of to-be-queried subtexts, the at least two to-be-queried subtexts from the plurality of to-be-queried subtexts based on the dependency relationship.

Optionally, the processing unit 1012 is further configured to determine, based on the query operation information, whether there is a dependency relationship between the plurality of to-be-queried subtexts.

In a possible implementation, the communication unit 1013 is specifically configured to output, when there is the dependency relationship between the plurality of to-be-queried subtexts, the plurality of first subquery results based on the dependency relationship.

Optionally, the obtaining unit 1011 is specifically configured to: obtain to-be-queried information; and when a format of the to-be-queried information is a text format, use the to-be-queried information as the to-be-queried text; or when a format of the to-be-queried information is a non-text format, perform format conversion on the to-be-queried information to obtain the to-be-queried text.

In another possible design, the text processing apparatus 10 may be configured to perform the steps or procedures performed by the terminal in the text processing methods in FIG. 17 and FIG. 18.

Specifically, the communication unit 1013 is configured to send, to a server in response to a target operation, a query request used to query a to-be-queried text. The communication unit 1013 is configured to receive a plurality of first subquery results sent by the server, where the plurality of first subquery results are obtained by the server by generating, in response to the query request, query operation information based on the to-be-queried text, and performing, by using a text generation model, first query processing on a plurality of to-be-queried subtexts determined based on the query operation information, the query operation information represents a query plan for querying the to-be-queried text, and first query processing on at least two of the plurality of to-be-queried subtexts is performed in parallel. The processing unit 1012 is configured to display the plurality of first subquery results.

Optionally, the apparatus further includes the obtaining unit 1011. The obtaining unit 1011 is configured to obtain the to-be-queried text in response to the target operation. The processing unit 1012 is further configured to generate the query request that carries the to-be-queried text.

Optionally, the query operation information is obtained after the server processes the to-be-queried text by using an operation information generation model.

Optionally, the operation information generation model is obtained by the server by obtaining a to-be-queried sample text and sample query operation information corresponding to the to-be-queried sample text, and training an initial operation information generation model based on the to-be-queried sample text and the sample query operation information, and the sample query operation information represents a query plan for querying the to-be-queried sample text.

Optionally, at least two of the plurality of first subquery results are sent by the server to the terminal in parallel.

Optionally, at least two of the plurality of first subquery results are displayed in parallel.

Optionally, the plurality of to-be-queried subtexts are a plurality of initial to-be-queried subtexts determined by the server from the query operation information; or the plurality of to-be-queried subtexts are obtained by the server by determining a plurality of initial to-be-queried subtexts from the query operation information, performing, for each initial to-be-queried subtext, second query processing on the initial to-be-queried subtext by using a search service to obtain a second subquery result, and combining the second subquery result and the initial to-be-queried subtext.

Optionally, the plurality of first subquery results are obtained by the server by performing first query processing on the plurality of to-be-queried subtexts in parallel by using a generative pre-trained transformer GPT, where the text generation model includes the GPT.

Optionally, the plurality of first subquery results are obtained by the server by performing, when there is no dependency relationship between the plurality of to-be-queried subtexts, first query processing on the plurality of to-be-queried subtexts in parallel by using the GPT, where the text generation model includes the GPT.

Optionally, the plurality of first subquery results are obtained by the server by performing, when there is a dependency relationship between the plurality of to-be-queried subtexts, first query processing on the plurality of to-be-queried subtexts by using the GPT, where first query processing on at least two of the plurality of to-be-queried subtexts is performed in parallel, a quantity of the at least two to-be-queried subtexts is less than a quantity of the plurality of to-be-queried subtexts, and the text generation model includes the GPT.

Optionally, when there is a dependency relationship between the plurality of to-be-queried subtexts, the at least two to-be-queried subtexts are determined by the server from the plurality of to-be-queried subtexts based on the dependency relationship.

Optionally, when there is a dependency relationship between the plurality of to-be-queried subtexts, the plurality of first subquery results are output by the server to the terminal based on the dependency relationship.

It should be noted that the text processing apparatus is embodied in a form of functional unit. The term "unit" herein may be implemented in a form of software and/or hardware. This is not specifically limited.

For example, the "unit" may be a software program, a hardware circuit, or a combination thereof that implements the foregoing function. The hardware circuit may include an application-specific integrated circuit (application-specific integrated circuit, ASIC), an electronic circuit, a processor (for example, a shared processor, a dedicated processor, or a group processor) and a memory that are configured to execute one or more software or firmware programs, a combined logic circuit, and/or another suitable component that supports the described functions.

Therefore, in the examples described in embodiments of this application, the units can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

FIG. 20 is a diagram of a structure of an electronic device according to this application. A dashed line in FIG. 20 indicates that instructions or a program is optional. The electronic device 11 may be configured to implement the text processing method described in the foregoing method embodiments.

The electronic device 11 includes one or more processors 1101. The one or more processors 1101 may support the electronic device 11 in implementing the text processing methods in the method embodiments. The processor 1101 may be a general-purpose processor or a dedicated processor. For example, the processor 1101 may be a central processing unit (central processing unit, CPU), a digital signal processor (digital signal processor, DSP), an application-specific integrated circuit (application-specific integrated circuit, ASIC), a field programmable gate array (field programmable gate array, FPGA), or another programmable logic device, for example, a discrete gate, a transistor logic device, or a discrete hardware component.

The processor 1101 may be configured to: control the electronic device 11, execute a software program, and process data of the software program. The electronic device 11 may further include a communication unit 1105, configured to implement signal input (receiving) and output (sending).

For example, the electronic device 11 may be a chip, and the communication unit 1105 may be an input circuit and/or an output circuit of the chip, or the communication unit 1105 may be a communication interface of the chip. The chip may be used as a component of a terminal device or another electronic device.

For another example, the electronic device 11 may be a terminal device, and the communication unit 1105 may be a transceiver of the terminal device, or the communication unit 1105 may be a transceiver circuit of the terminal device.

The electronic device 11 may include one or more memories 1102. The memory 1102 stores a program 1104. The program 1104 may be run by the processor 1101 to generate instructions 1103, to enable the processor 1101 to perform, according to the instructions 1103, the text processing methods described in the foregoing method embodiments.

Optionally, the memory 1102 may further store data.

Optionally, the processor 1101 may further read the data stored in the memory 1102. The data and the program 1104 may be stored at a same storage address, or the data and the program 1104 may be stored at different storage addresses.

The processor 1101 and the memory 1102 may be separately disposed, or may be integrated together, for example, integrated on a system on chip (system on chip, SOC) of the terminal device.

For example, the memory 1102 may be configured to store the related program 1104 of the text processing method provided in embodiments of this application, and the processor 1101 may be configured to invoke, when processing a text, the related program 1104 of the text processing method stored in the memory 1102, to perform the method in embodiments of this application, for example, obtain a to-be-queried text; generate query operation information based on the to-be-queried text, where the query operation information represents a query plan for querying the to-be-queried text; determine a plurality of to-be-queried subtexts based on the query operation information; and perform first query processing on the plurality of to-be-queried subtexts by using a text generation model to obtain a first subquery result corresponding to each to-be-queried subtext, and output a plurality of first subquery results, where first query processing on at least two of the plurality of to-be-queried subtexts is performed in parallel; or perform the method in embodiments of this application, for example, send, to a server in response to a target operation, a query request used to query a to-be-queried text; receive a plurality of first subquery results sent by the server, where the plurality of first subquery results are obtained by the server by generating, in response to the query request, query operation information based on the to-be-queried text, and performing, by using a text generation model, first query processing on a plurality of to-be-queried subtexts determined based on the query operation information, the query operation information represents a query plan for querying the to-be-queried text, and first query processing on at least two of the plurality of to-be-queried subtexts is performed in parallel; and display the plurality of first subquery results.

This application further provides a computer program product. When the computer program product is executed by the processor 1101, the text processing method in any method embodiment of this application is implemented.

The computer program product may be stored in the memory 1102. For example, the computer program product is the program 1104. After processing processes such as preprocessing, compilation, assembly, and linking, the program 1104 is finally converted into an executable target file that can be executed by the processor 1101.

This application further provides a computer-readable storage medium. The computer-readable storage medium stores a computer program. When the computer program is executed by a computer, the text processing method according to any one of the method embodiments of this application is implemented. The computer program may be a high-level language program, or may be an executable target program.

The computer-readable storage medium is, for example, the memory 1102. The memory 1102 may be a volatile memory or a nonvolatile memory, or the memory 1102 may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It may be clearly understood by a person skilled in the art that, for the purpose of convenient and brief description, for a detailed working process and a generated technical effect of the foregoing apparatus and device, refer to a corresponding process and technical effect in the foregoing method embodiments. Details are not described herein again.

In several embodiments provided in this application, the disclosed system, apparatus, and method may be implemented in another manner. For example, some features of the method embodiments described above may be ignored or not performed. The apparatus embodiment described above is merely an example. Division into the units is merely logical function division and may be other division during actual implementation. A plurality of units or components may be combined or integrated into another system. In addition, coupling between the units or coupling between the components may be direct coupling or indirect coupling. The coupling includes an electrical connection, a mechanical connection, or a connection in another form.

It should be understood that sequence numbers of the processes do not mean an execution sequence in embodiments of this application. The execution sequence of the processes should be determined based on functions and internal logic of the processes, and should not be constituted as any limitation on the implementation processes of embodiments of this application.

In addition, terms "system" and "network" may be used interchangeably in this specification. The term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

In conclusion, the foregoing descriptions are merely example embodiments of the technical solutions of this application, but are not intended to limit the protection scope of this application. Any modification, equivalent replacement, or improvement made without departing from the spirit and principle of this application shall fall within the protection scope of this application.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A text processing method, applied to a terminal or a server, wherein the method comprises:
obtaining a to-be-queried text;
generating query operation information based on the to-be-queried text, wherein the query operation information represents a query plan for querying the to-be-queried text;
determining a plurality of to-be-queried subtexts based on the query operation information; and
performing first query processing on the plurality of to-be-queried subtexts by using a text generation model to obtain a first subquery result corresponding to each to-be-queried subtext, and outputting a plurality of first subquery results, wherein first query processing on at least two of the plurality of to-be-queried subtexts is performed in parallel.

2. The method according to claim 1, wherein generating the query operation information based on the to-be-queried text comprises:
processing the to-be-queried text by using an operation information generation model, to obtain the query operation information.

3. The method according to claim 2, wherein the operation information generation model is obtained in the following manner:
obtaining a to-be-queried sample text and sample query operation information corresponding to the to-be-queried sample text, wherein the sample query operation information represents a query plan for querying the to-be-queried sample text; and
training an initial operation information generation model based on the to-be-queried sample text and the sample query operation information, to obtain the operation information generation model.

4. The method according to any one of claims 1 to 3, wherein determining the plurality of to-be-queried subtexts based on the query operation information comprises:
determining a plurality of initial to-be-queried subtexts from the query operation information; and
using the plurality of initial to-be-queried subtexts as the plurality of to-be-queried subtexts; or
performing, for each initial to-be-queried subtext, second query processing on the initial to-be-queried subtext by using a search service to obtain a second subquery result, and combining the second subquery result and the initial to-be-queried subtext to obtain the to-be-queried subtext.

5. The method according to any one of claims 1 to 4, wherein performing first query processing on the plurality of to-be-queried subtexts by using the text generation model to obtain the first subquery result corresponding to each to-be-queried subtext comprises:
performing first query processing on the plurality of to-be-queried subtexts in parallel by using a generative pre-trained transformer GPT to obtain the first subquery result corresponding to each to-be-queried subtext, wherein the text generation model comprises the GPT.

6. The method according to any one of claims 1 to 4, wherein performing first query processing on the plurality of to-be-queried subtexts by using the text generation model to obtain the first subquery result corresponding to each to-be-queried subtext comprises:
performing, when there is no dependency relationship between the plurality of to-be-queried subtexts, first query processing on the plurality of to-be-queried subtexts in parallel by using a GPT to obtain the first subquery result corresponding to each to-be-queried subtext, wherein the text generation model comprises the GPT.

7. The method according to any one of claims 1 to 4, wherein performing first query processing on the plurality of to-be-queried subtexts by using the text generation model to obtain the first subquery result corresponding to each to-be-queried subtext comprises:
performing, when there is a dependency relationship between the plurality of to-be-queried subtexts, first query processing on the plurality of to-be-queried subtexts by using a GPT to obtain the first subquery result corresponding to each to-be-queried subtext, wherein first query processing on at least two of the plurality of to-be-queried subtexts is performed in parallel, a quantity of the at least two to-be-queried subtexts is less than a quantity of the plurality of to-be-queried subtexts, and the text generation model comprises the GPT.

8. The method according to claim 7, wherein before performing, when there is the dependency relationship between the plurality of to-be-queried subtexts, first query processing on the plurality of to-be-queried subtexts by using the GPT to obtain the first subquery result corresponding to each to-be-queried subtext, the method comprises:
when there is the dependency relationship between the plurality of to-be-queried subtexts, determining the at least two to-be-queried subtexts from the plurality of to-be-queried subtexts based on the dependency relationship.

9. The method according to claim 6 or 7, wherein before performing first query processing on the plurality of to-be-queried subtexts by using the text generation model to obtain the first subquery result corresponding to each to-be-queried subtext, the method comprises:
determining, based on the query operation information, whether there is the dependency relationship between the plurality of to-be-queried subtexts.

10. The method according to claim 5 or 7, wherein outputting the plurality of first subquery results comprises:
outputting, when there is the dependency relationship between the plurality of to-be-queried subtexts, the plurality of first subquery results based on the dependency relationship.

11. The method according to any one of claims 1 to 10, wherein obtaining the to-be-queried text comprises:
obtaining to-be-queried information; and
when a format of the to-be-queried information is a text format, using the to-be-queried information as the to-be-queried text; or
when a format of the to-be-queried information is a non-text format, performing format conversion on the to-be-queried information to obtain the to-be-queried text.

12. The method according to any one of claims 1 to 7, wherein at least two of the plurality of first subquery results are output in parallel.

13. A text processing method, applied to a terminal, wherein the method comprises:
sending, to a server in response to a target operation, a query request used to query a to-be-queried text;
receiving a plurality of first subquery results sent by the server, wherein the plurality of first subquery results are obtained by the server by generating, in response to the query request, query operation information based on the to-be-queried text, and performing, by using a text generation model, first query processing on a plurality of to-be-queried subtexts determined based on the query operation information, the query operation information represents a query plan for querying the to-be-queried text, and first query processing on at least two of the plurality of to-be-queried subtexts is performed in parallel; and
displaying the plurality of first subquery results.

14. The method according to claim 13, wherein the query operation information is obtained after the server processes the to-be-queried text by using an operation information generation model.

15. The method according to claim 14, wherein the operation information generation model is obtained by the server by obtaining a to-be-queried sample text and sample query operation information corresponding to the to-be-queried sample text, and training an initial operation information generation model based on the to-be-queried sample text and the sample query operation information, and the sample query operation information represents a query plan for querying the to-be-queried sample text.

16. The method according to claim 13, wherein at least two of the plurality of first subquery results are sent by the server to the terminal in parallel.

17. The method according to claim 16, wherein the at least two of the plurality of first subquery results are displayed in parallel.

18. A text processing system, wherein the system comprises a server and a terminal, and the terminal is connected to the server;
the terminal is configured to send, to the server in response to a target operation, a query request used to query a to-be-queried text;
the server is configured to: generate, in response to the query request, query operation information based on the to-be-queried text, wherein the query operation information represents a query plan for querying the to-be-queried text; determine a plurality of to-be-queried subtexts based on the query operation information; perform first query processing on the plurality of to-be-queried subtexts by using a text generation model to obtain a first subquery result corresponding to each to-be-queried subtext, wherein first query processing on at least two of the plurality of to-be-queried subtexts is performed in parallel; and send a plurality of first subquery results to the terminal; and
the terminal is further configured to: receive the plurality of first subquery results sent by the server, and display the plurality of first subquery results.

19. A text processing apparatus, wherein the apparatus comprises:
an obtaining unit, configured to obtain a to-be-queried text;
a processing unit, configured to generate query operation information based on the to-be-queried text, wherein the query operation information represents a query plan for querying the to-be-queried text, wherein
the processing unit is further configured to determine a plurality of to-be-queried subtexts based on the query operation information; and
the processing unit is further configured to perform first query processing on the plurality of to-be-queried subtexts by using a text generation model to obtain a first subquery result corresponding to each to-be-queried subtext, wherein first query processing on at least two of the plurality of to-be-queried subtexts is performed in parallel; and
a communication unit, configured to output a plurality of first subquery results.

20. An electronic device, comprising:
one or more processors and a memory, wherein
the memory is coupled to the one or more processors, the memory is configured to store computer program code, the computer program code comprises computer instructions, and the one or more processors invoke the computer instructions to enable the electronic device to perform the text processing method according to any one of claims 1 to 12 or claims 13 to 17.

21. A computer-readable storage medium, wherein the computer-readable storage medium stores a computer program, and when the computer program is executed by a processor, the processor is enabled to perform the text processing method according to any one of claims 1 to 12 or claims 13 to 17.
